# EUROPEAN PATENT APPLICATION

(11) **EP 4 737 400 A1**
(43) Date of publication of application: **06.05.2026**
(21) Application number: 25157186.5
(22) Date of filing: 11.02.2025
(51) Int. Cl.: C01G 53/504, C01G 53/506, H01M 4/525

(54) **POSITIVE ACTIVE MATERIAL HAVING SPINEL NANOCOMPOSITE STRUCTURE FOR SECONDARY BATTERY AND METHOD THEREOF**

(30) Priority: 31.10.2024 KR 20240152619; 07.02.2025 KR 20250015772
(71) Applicant: Battery Solution, Seoul 04763 (KR)
(72) Inventor: PARK, Jang Uk, 21404 Incheon (KR); CHOI, Kyoung Ran, 54074 Gunsan-si, Jeonbuk-do (KR)
(74) Representative: Prüfer & Partner mbB Patentanwälte · Rechtsanwälte

(57) **Abstract**

The positive active material for lithium secondary batteries according to the present invention includes a secondary particle composed of a plurality of primary particles, wherein the primary particles contain a nanocomposite in which spinel (Fd3m) and layered (R3m) structures coexist at the nanoscale.

Although the spinel structure offers high structural stability, it has the drawback of low initial capacity. However, the positive material of the present invention addresses this limitation by introducing a nanocomposite structure in which layered and spinel structures are mixed at the nanoscale. This innovation provides higher structural stability and improved electrochemical performance compared to conventional single-structure positive materials.

By incorporating the spinel structure into the nanocomposite, the invention enhances structural stability, minimizes deformation during charge-discharge cycles, and simultaneously provides a three-dimensional lithium-ion diffusion pathway. This results in faster lithium-ion transport, significantly improving rate capability and high-rate charge-discharge performance.

## Description

### CROSS-REFERENCE TO RELATED APPLICATIONS

This application claims priority to and the benefit of Korean Patent Application No. 10-2024-0152619 and Korean Patent Application No. 10-2025-0015772 filed in the Korean Intellectual Property Office on October 31, 2024 and February 7, 2025, the entire contents of which are incorporated herein by reference.

### TECHNICAL FIELD

The present invention relates to a positive active material for a lithium-ion secondary battery, and more specifically, to a positive active material for a lithium-ion secondary battery having a nano-composite structure in which a spinel structure and a layered structure are mixed at the nanoscale, as well as a method for producing the same.

### BACKGROUND ART

The lithium-ion secondary battery has high energy density and long lifespan characteristics, making it widely used in various electronic devices, electric vehicles, and energy storage systems (ESS). One of the key factors determining the performance of a lithium-ion secondary battery is the positive active material, which is typically composed of transition metal oxides with either a layered structure, containing elements such as nickel (Ni), cobalt (Co), and manganese (Mn), or a spinel structure.

Conventional high-nickel (high-Ni) positive active materials can provide high capacity; however, they suffer from structural instability during charge and discharge cycles, leading to capacity degradation and thermal deterioration. In particular, the layered structure undergoes significant structural deformation during cycling, making it prone to particle cracking. When particle cracking occurs, electrolyte penetration into the secondary particle can lead to the degradation of both the internal and external primary particle surfaces. This results in a decrease in electronic conductivity and an increase in interfacial resistance, significantly deteriorating battery performance.

To address these issues, research has been conducted on the partial incorporation of the spinel structure. The spinel structure offers a three-dimensional lithium-ion diffusion pathway, enhancing conductivity and improving structural stability, thereby reducing deformation during charge and discharge cycles. However, relying solely on the spinel structure may lead to lower initial capacity. Therefore, an optimal technology that combines both layered and spinel structures is required to achieve superior performance.

Conventionally, the spinel structure has been regarded as a trace of the degradation of layered positive materials. The spinel structure is thermodynamically more stable than the layered structure and develops as a result of positive material degradation, particularly at the secondary particle surface where the positive material comes into contact with the electrolyte.

### SUMMARY OF THE INVENTION

The technical objects of the present disclosure are not limited to the foregoing technical objects, and other non-mentioned technical objects will be clearly understood by those skilled in the art from the description below.

The present invention provides a nano-composite positive active material that enhances stability through doping with elements such as Mo, Ta, and W, while also improving rate capability and lifespan characteristics.

The positive active material for a lithium-ion secondary battery according to the present invention includes secondary particles composed of a group of primary particles, wherein the primary particles comprise a nanocomposite in which a spinel (Fd3m) structure and a layered (R3m) structure are mixed at the nanoscale.

Generally, the spinel structure is a trace of degradation found in a band-like form on the surface of primary particles in positive materials after charge and discharge cycles. However, the nanocomposite spinel structure according to the present invention is a structure observed in the initial state before the operation of the positive material and is not a trace of degradation. Furthermore, the spinel structure is characterized by being present in a nanocomposite form inside the primary particles rather than appearing as a band-like formation on the surface of the primary particles.

Additionally, in the SAED electron diffraction image, electron diffraction spots S(a, a, a+2) and S(b, b, b-2) may be observed.

S() represents the spinel structure, while L() represents the layered crystal structure.

Furthermore, in the SAED electron diffraction image, the diffraction peak intensity obtained from the L(0, -1, -2-3(m-1)) plane and the S(a, a, a+2) plane may satisfy the relationship I(L(0, -1, -2-3(m-1))) > I(S(a, a, a+2)). Similarly, the diffraction peak intensity obtained from the L(0, 1, 2+3(n-1)) plane and the S(b, b, b-2) plane may satisfy the relationship I(L(0, 1, 2+3(n-1))) > I(S(b, b, b-2)).

Additionally, the maximum length passing through the center of the cross-sectional area of the spinel-structured region may range from 1 nm to 100 nm, and the cross-sectional area of the spinel-structured region may range from 1 nm² to 10,000 nm².

Moreover, the nanocomposite may be present inside or on the surface of the primary particles, and it may also be present inside or on the surface of the secondary particles.

The nanocomposite can be observed before the initiation of the charge-discharge cycle of the positive active material.

Additionally, the nanocomposite provides a three-dimensional Li⁺ migration pathway in the charged state, thereby improving the rate performance of the positive active material.

Furthermore, the nanocomposite observed before the charge-discharge cycle may still be present in the charged state and after charge-discharge cycling. The nanocomposite found inside the primary particles after the charge-discharge cycle can be distinguished from impurity spinel formed on the surface of the secondary particles due to electrode degradation during the charge-discharge cycle.

The primary particles of the positive active material include nickel (Ni), M1, and M2, wherein M1 comprises at least one of cobalt (Co), manganese (Mn), and aluminum (Al). The nickel (Ni) content is 50 mol% or more, and M2 is a doping element included in an amount of 0.05 mol% to 10 mol%.

M2 may include one or more of cobalt (Co), manganese (Mn), titanium (Ti), magnesium (Mg), tantalum (Ta), niobium (Nb), tungsten (W), molybdenum (Mo), antimony (Sb), tellurium (Te), tin (Sn), ruthenium (Ru), boron (B), hafnium (Hf), gallium (Ga), germanium (Ge), chromium (Cr), vanadium (V), copper (Cu), calcium (Ca), zinc (Zn), barium (Ba), strontium (Sr), aluminum (Al), and zirconium (Zr).

The positive active material may be obtained by mixing a composite metal hydroxide A(OH)₂ precursor with M2 and performing high-temperature heat treatment, where A may be one of Ni, Co, Mn, or Al.

A general precursor or a wet-doped precursor is mixed with a lithium source (e.g., lithium hydroxide (LiOH) or lithium carbonate (Li₂CO₃)) and subjected to a first preliminary calcination at 450°C for 5 hours. Subsequently, the pre-calcined material is further mixed with a dry dopant (e.g., Nb₂O₅, Ta₂O₅), followed by a second calcination at 750°C for 10 hours to produce the final positive active material.

Additionally, a two-step co-doping process can be applied, where a W, Al two-step co-doped Li[Ni_{0.87}Co_{0.10}Al_{0.03}]O₂ precursor is first heat-treated with a lithium and aluminum (Al) mixture. After the first heat treatment, an additional dopant, W, is introduced, and a second heat treatment is performed.

Furthermore, after obtaining a wet-doped precursor, it is mixed with a lithium source (LiOH or Li₂CO₃) and dopants (e.g., Nb₂O₅, Al₂O₃). A preliminary calcination is conducted at 450°C for 5 hours, followed by a main calcination at 700-900°C to produce the final positive active material.

Alternatively, the positive active material may be obtained by mixing an M2-doped composite metal hydroxide (M2-doped A(OH)₂) precursor with a lithium source and performing high-temperature heat treatment, where A may be one of Ni, Co, Mn, or Al.

The positive active material may also be obtained by mixing an M2-coated composite metal hydroxide (M2-coated A(OH)₂) precursor with a lithium source and performing high-temperature heat treatment, where A may be one of Ni, Co, Mn, or Al.

Additionally, the positive active material may be obtained by mixing a lithium source and M2 with either an M2-doped A(OH)₂ precursor or an M2-coated A(OH)₂ precursor and then performing high-temperature heat treatment, where A may be one of Ni, Co, Mn, or Al. Furthermore, a concentration gradient may be formed within the particles for Ni, Co, or Mn. Additionally, the positive active material may be obtained through a two-step calcination process. In the first calcination step, at least one of the composite metal hydroxide A(OH)₂ precursor and the wet-doped composite metal hydroxide A(OH)₂ precursor is mixed with a lithium source and subjected to high-temperature heat treatment. In the second calcination step, a dry dopant is further introduced, followed by an additional high-temperature heat treatment to complete the synthesis of the final positive active material.

The spinel structure offers high structural stability but has the drawback of low initial capacity. However, the positive active material of the present invention proposes a nano-composite positive active material in which the layered structure and the spinel structure coexist at the nanoscale. This enables higher structural stability and improved electrochemical performance compared to conventional single-structure positive materials. Additionally, conventional high-nickel (high-Ni) layered structures may experience structural collapse and degradation during charge-discharge cycles. In contrast, the present invention introduces a nano-composite structure incorporating a spinel structure, which enhances structural stability, minimizes deformation during cycling, and provides a three-dimensional lithium-ion diffusion pathway. This improves lithium-ion mobility, enhances rate capability, and enables high-speed charge-discharge performance.

Furthermore, the positive active material of the present invention disperses mechanical stress (strain) generated during charge-discharge cycles, thereby extending the lifespan of the electrode. In particular, doping with elements such as Mo, Ta, Sb, Nb, Ti, Zr and W further enhances long-term cycling stability.

Moreover, according to the positive active material and its manufacturing method proposed in the present invention, a nano-composite structure can be formed by combining wet and dry doping processes within conventional positive material production methods. This allows the efficient production of high-performance positive active materials without requiring additional complex processing steps compared to existing manufacturing methods.

### BRIEF DESCRIPTION OF THE DRAWINGS

Fig. 1 and Fig. 2 are TEM (Transmission Electron Microscopy) images illustrating the characteristics of the positive electrode material with a layered & spinel nanocomposite structure according to the present embodiment.
Fig. 3 is a graph showing the diffraction peak intensities of the layered structure and spinel structure.
Fig. 4 is an SEM image of a Mo wet-doped [Ni_{0.98}Co_{0.01}Mn_{0.01}](OH)₂ precursor according to one embodiment of the present invention.
Fig. 5 is a TEM image showing the crystal structure of Mo wet-doped Li[Ni_{0.98}Co_{0.01}Mn_{0.01}]O₂.
Fig. 6 is another TEM images showing the crystal structure of Mo wet-doped Li[Ni_{0.98}Co_{0.01}Mn_{0.01}]O₂ and conventional Li[Ni_{0.98}Co_{0.01}Mn_{0.01}]O₂.
Fig. 7 is an XRD analysis graphs showing the crystal structure of Mo wet-doped Li[Ni_{0.98}Co_{0.01}Mn_{0.01}]O₂ and conventional Li[Ni_{0.98}Co_{0.01}Mn_{0.01}]O₂.
Fig. 8 is a TEM image showing the crystal structure of Mo wet-doped Li[Ni_{0.98}Co_{0.01}Mn_{0.01}]O₂ after 100 cycles.
Fig. 9 is a TEM image showing the crystal structure of Mo wet-doped Li[Ni_{0.98}Co_{0.01}Mn_{0.01}]O₂ after charging to 4.3V.
Fig. 10 and Fig. 11 are TEM images showing the crystal structure of Ta two-step doped Li[Ni_{0.94}Co_{0.04}Mn_{0.02}]O₂ and conventional Li[Ni_{0.94}Co_{0.04}Mn_{0.02}]O₂.
Fig. 12 is an SEM image of Co wet-coated [Ni_{0.9}Co_{0.05}Mn_{0.05}](OH)₂ precursor.
Fig. 13 is a TEM-EDS image of Co wet-coated [Ni_{0.9}Co_{0.05}Mn_{0.05}](OH)₂ precursor.
Fig. 14 and Fig. 15 are TEM images showing the crystal structure of Co wet-coated Li[Ni_{0.9}Co_{0.05}Mn_{0.05}]O₂ and conventional Li[Ni_{0.9}Co_{0.05}Mn_{0.05}]O₂.
Fig. 16 is a TEM-EDS image of Co wet-coated Li[Ni_{0.9}Co_{0.05}Mn_{0.05}]O₂ positive electrode material.
Fig. 17 is an XRD analysis graph showing the crystal structure of Co wet-doped Li[Ni_{0.09}Co_{0.05}Mn_{0.05}]O₂ and conventional Li[Ni_{0.9}Co_{0.05}Mn_{0.05}]O₂.
Fig. 18 and Fig. 19 are TEM images showing the crystal structure of Sb dry-doped gradient Li[Ni_{0.09}Co_{0.05}Mn_{0.05}]O₂ and conventional gradient Li[Ni_{0.9}Co_{0.05}Mn_{0.05}]O₂.
Fig. 20 and Fig. 21 are TEM images showing the crystal structure of Ti wet and Mo dry co-doped Li[Ni_{0.88}Co_{0.06}Mn_{0.06}]O₂ and conventional Li[Ni_{0.88}Co_{0.06}Mn_{0.06}]O₂.
Fig. 22 is an XRD analysis graph showing the crystal structure of Ti wet and Mo dry co-doped Li[Ni_{0.88}Co_{0.06}Mn_{0.06}]O₂ and conventional Li[Ni_{0.88}Co_{0.06}Mn_{0.06}]O₂.
Fig. 23 and Fig. 24 are TEM images showing the crystal structure of Ta and Al dry co-doped Li[Ni_{0.89}Co_{0.1}Al_{0.01}]O₂ according to one embodiment and conventional Li[Ni_{0.89}Co_{0.1}Al_{0.01}]O₂.
Fig. 25 and Fig. 26 are TEM images showing the crystal structure of W and Al two-step co-doped Li[Ni_{0.87}Co_{0.10}Al_{0.03}]O₂ and conventional Li[Ni_{0.87}Co_{0.10}Al_{0.03}]O₂.
Fig. 27 and Fig. 28 are TEM images showing the crystal structure of W wet and Ti dry co-doped Li[Ni_{0.91}Mn_{0.09}]O₂ according to one embodiment and conventional Li[Ni_{0.91}Mn_{0.09}]O₂.
Fig. 29 is an SEM image of Co wet-coated [Ni_{0.7}Co_{0.1}Mn_{0.2}](OH)₂ precursor according to one embodiment.
Fig. 30 and Fig. 31 are TEM images showing the crystal structure of Co wet-coated and W dry-doped Li[Ni_{0.7}Co_{0.1}Mn_{0.2}]O₂ and conventional Li[Ni_{0.7}Co_{0.1}Mn_{0.2}]O₂.
Fig. 32 and Fig. 33 are TEM images showing the crystal structure of W and Zr dry co-doped gradient Li[Ni_{0.7}Co_{0.05}Mn_{0.25}]O₂ and conventional gradient Li[Ni_{0.7}Co_{0.05}Mn_{0.25}]O₂.
Fig. 34 and Fig. 35 are TEM images showing the crystal structure of Mo two-step doped Li[Ni_{0.6}Mn_{0.4}]O₂ and conventional Li[Ni_{0.6}Mn_{0.4}]O₂.
Fig. 36 is an XRD analysis graph showing the crystal structure of Mo two-step doped Li[Ni_{0.6}Mn_{0.4}]O₂ and conventional Li[Ni_{0.6}Mn_{0.4}]O₂.

### DETAILED DESCRIPTION

An exemplary embodiment of the present invention will be described with reference to the accompanying drawings, and an object and the configuration, and the features of the present invention will be understood well through the detailed description. The positive active material according to the present invention includes secondary particles composed of a group of primary particles. The primary particles contain a nanocomposite in which the spinel (Fd3m) structure and the layered (R-3m) structure coexist at the nanoscale. In one embodiment of the present invention, the nanocomposite structure consists of a mixture of spinel and layered structures within the primary particles, and the characteristic peaks of both structures are simultaneously detected in the SAED electron diffraction pattern. In this case, the cross-sectional area of the spinel structure ranges from 1 nm² to 10,000 nm², and the maximum length is between 1 nm and 100 nm.

The main components of the transition metal composition include a composite metal oxide containing nickel (Ni), cobalt (Co), and manganese (Mn) (Li[NiₓCo_{y}Mn_{z}]O₂, where 0.6 ≤ x ≤ 0.98, 0 ≤ y ≤ 0.2, 0 ≤ z ≤ 0.4). Additional doping elements such as Mo, Ta, W, Al, Ti, and Zr can be incorporated in the range of 0.05 to 10 mol% to enhance stability and performance. The positive active material according to one embodiment of the present invention provides a three-dimensional lithium-ion diffusion pathway (3D Li⁺ diffusion pathway) in electrochemical applications, improving rate capability and significantly enhancing cycle life by minimizing structural collapse during charge-discharge cycles. Furthermore, it exhibits superior high-temperature stability compared to conventional single-layered structure positive electrode materials.

Additionally, in the SAED electron diffraction image, electron diffraction spots S(a, a, a+2) and S(b, b, b-2) may be observed. Furthermore, in the SAED electron diffraction image, the diffraction peak intensity of the L(0, -1, -2-3(m-1)) plane and the S(a, a, a+2) plane satisfies the relationship I(L(0, -1, -2-3(m-1))) > I(S(a, a, a+2)). Similarly, the diffraction peak intensity of the L(0, 1, 2+3(n-1)) plane and the S(b, b, b-2) plane satisfies I(L(0, 1, 2+3(n-1))) > I(S(b, b, b-2)). For example, I(L(0, -1, -2)) > I(S(-1, -1, 1)), and I(L(0, 1, 2)) > I(S(1, 1, -1)). Furthermore, the nanocomposite according to the present invention may be present inside or on the surface of the primary particles and may also be located inside or on the surface of the secondary particles. The nanocomposite can be observed before the start of the charge-discharge cycle of the positive active material. It provides a three-dimensional Li⁺ migration pathway in the charged state, thereby improving the rate performance of the positive material. The nanocomposite observed before charge-discharge cycling may also be found in the charged state and after cycling. Additionally, the nanocomposite found within the primary particles after cycling can be distinguished from impurity spinel formed on the surface of the secondary particles due to positive degradation during charge-discharge cycling.

The precursor mixed with lithium undergoes heat treatment to form the positive material, during which the nanocomposite structure is created. In this process, the positive active material can be obtained by mixing a composite metal hydroxide A(OH)₂ precursor with M₂ and subjecting it to high-temperature heat treatment, where A may be Ni, Co, Mn, or Al.

Additionally, the positive active material can be obtained by mixing an M2-doped composite metal hydroxide (M2-doped A(OH)₂) precursor with a lithium source and performing high-temperature heat treatment. Another method involves mixing an M2-coated composite metal hydroxide (M2-coated A(OH)₂) precursor with a lithium source and performing high-temperature heat treatment. The positive active material can also be obtained by mixing either an M2-doped A(OH)₂ precursor or an M2-coated A(OH)₂ precursor with a lithium source and additional M2, followed by high-temperature heat treatment. A concentration gradient of Ni, Co, or Mn may also be formed within the particles.

Next, doping or coating can be performed. Specifically, the desired positive material can be ultimately produced by applying doping or wet coating methods using M2. This allows for the control of desired electrochemical properties.

M2 refers to specific metal elements used as doping elements in the present invention, including not only nickel (Ni), cobalt (Co), and manganese (Mn) but also titanium (Ti), magnesium (Mg), tantalum (Ta), niobium (Nb), tungsten (W), molybdenum (Mo), antimony (Sb), tellurium (Te), tin (Sn), ruthenium (Ru), boron (B), hafnium (Hf), gallium (Ga), germanium (Ge), chromium (Cr), vanadium (V), copper (Cu), calcium (Ca), zinc (Zn), barium (Ba), strontium (Sr), aluminum (Al), and zirconium (Zr).

M2 is included in a concentration range of 0.05 mol% to 10 mol%, playing a role in enhancing the characteristics of the positive active material. Through doping, electrochemical performance is optimized, and ion conductivity is increased.

### [Manufacturing Method of the Positive Active Material According to One Embodiment]

A detailed description of the manufacturing method of the positive active material according to one embodiment of the present invention is provided. The positive active material in this embodiment can be produced through doping and calcination processes using a composite metal hydroxide precursor (A(OH)₂, where A = Ni, Co, Mn).

As an example, the composite metal hydroxide precursor can be synthesized through a co-precipitation process. For this, nickel sulfate (NiSO₄·6H₂O), cobalt sulfate (CoSO₄·7H₂O), and manganese sulfate (MnSO₄·H₂O) are mixed in a target molar ratio (x:y:z) to prepare a 2.5M metal ion solution. This prepared metal ion solution is injected into a 500L co-precipitation reactor using distilled water, while nitrogen (N₂) gas is supplied at a flow rate of 150L/min, and the mixture is stirred at a temperature of 50°C.

During the pH control and co-precipitation reaction, a 20M ammonia solution (NH₄OH) and a 6M sodium hydroxide solution (NaOH) are used to maintain the solution pH within the range of 10 to 12. This ensures the stable progress of the co-precipitation reaction, which is continued for 20 hours while stirring at 250 rpm to synthesize the metal hydroxide precursor. The synthesized precursor is filtered to remove impurities and is then washed multiple times to eliminate residual solvents and reaction by-products. The final precursor powder is obtained through vacuum drying at 110°C for 8 hours.

The synthesized precursor undergoes doping and coating processes to enhance its performance.

### Wet Doping Process

In the wet doping method, a doping solution containing elements such as Mo, Ta, Ti, Sb or W is added to the precursor to ensure the uniform distribution of specific elements within it. During this process, additional ammonia solution and caustic soda solution are introduced to facilitate the even dispersion of the dopants. After the reaction is completed, the doped precursor undergoes drying and grinding to obtain the final doped material.

### Dry Doping Process

In the dry doping method, the dried precursor is mixed with a lithium source (LiOH or Li₂CO₃). Additionally, solid dopants such as MoOs, WO₃, Al(OH)₃, TiO₂, Zr₂O₃, Nb₂O₅ or Ta₂O₅ are mixed in and uniformly ground. This optimizes the chemical composition of the precursor, ensuring a uniform structure when it is finally sintered into the positive active material.

### Calcination and Post-Treatment Process

Following doping or coating, the final positive active material is produced through a calcination and post-treatment process.

First, the precursor is mixed with a lithium source and subjected to pre-calcination at 450°C for 5 hours at a heating rate of 2°C/min. This pre-calcination step stabilizes the precursor's structure and removes impurities.

In the main sintering process, the pre-calcined material is further mixed to achieve the target composition and then calcined at a high temperature of 680-750°C for 10 hours. During this step, the composite metal hydroxide precursor undergoes crystallization, forming the spinel-layered nanocomposite structure.

After calcination, a post-treatment process is performed. This involves a grading process to control the particle size and achieve a uniform distribution. Additionally, a wet coating method can be applied, using materials such as Co(OH)₂ or Al₂O₃ for surface coating. This surface coating enhances the electrochemical stability of the positive active material and improves its long-term cycle performance.

However, the manufacturing method for the positive active material according to the present invention is not limited to the above-described process, and various alternative manufacturing methods can be applied. The following section describes alternative production methods based on different embodiments.

### 1. Synthesis of Composite Metal Hydroxide Precursor via Co-precipitation

This example describes a method for synthesizing a composite metal hydroxide precursor containing Ni, Co, and Mn using a co-precipitation process. For example, nickel sulfate (NiSC₄·6H₂O), cobalt sulfate (CoSO₄·7H₂O), and manganese sulfate (MnSO₄·H₂O) are mixed in a molar ratio of Ni:Co:Mn = 90:5:5 to prepare a 2.5M metal solution.

A 500L co-precipitation reactor is filled with distilled water, and N₂ gas is supplied at a flow rate of 150L/min while stirring at 250 rpm at a temperature of 50°C. The metal solution (40L/hr), 20M ammonia solution (4.5L/hr), and 6M NaOH solution (25L/hr) are continuously introduced into the reactor over 20 hours, maintaining the pH within the range of 10-12, to facilitate the synthesis of the composite metal hydroxide.

The synthesized precursor is filtered and washed to remove impurities, followed by vacuum drying at 110°C for 8 hours, resulting in a powder-form precursor.

### 2. Synthesis of Concentration-Gradient Composite Metal Hydroxide Precursor

This example describes a method for producing a concentration-gradient (Concentration-Gradient) composite metal hydroxide precursor, where the composition of the core and surface regions differ. During the co-precipitation synthesis stage, the composition of the metal ion solution is gradually adjusted to create a Ni-rich core (For example, Ni:Co:Mn = 100:0:0) and a surface region containing Co and Mn (For example, Ni:Co:Mn = 80:10:10). Through this controlled composition gradient, a gradual transition in the transition metal composition is achieved within the precursor. Compared to conventional materials, the synthesized precursor reduces internal stress during charge-discharge cycles, thereby enhancing long-term cycle stability of the final positive material.

### 3. Synthesis of Doped Precursor via Hetero-Element Doping

This example describes a method for enhancing the structural stability of the positive active material by doping elements such as Mo, W, Sb, Ti, Zr and Ta. Based on the precursor synthesized in Example 1 or Example 2, a doped precursor is produced by adding one or more doping elements (Mo, W, Ta) to the metal solution during the co-precipitation reaction at a concentration of 0.05-10 mol%.

Once the reaction is completed, the doped precursor is obtained through filtration, washing, and drying, ensuring the uniform incorporation of the doping elements.

### 4. Two-Step Doping and Wet + Dry Co-Doping Process

This manufacturing example adopts a two-step doping process, ensuring that the dopants are uniformly distributed within the positive active material.

### Two-Step Doping Process

The conventional two-step doping method is carried out using a general precursor. A general precursor or a wet-doped precursor is mixed with a lithium source (e.g., lithium hydroxide (LiOH) or lithium carbonate (Li₂CO₃)) and subjected to a first pre-calcination at 450°C for 5 hours. Subsequently, the pre-calcined material is further mixed with a dry dopant (e.g., Nb₂O₅, Ta₂O₅), followed by a second calcination at 750°C for 10 hours to produce the final positive active material.

For two-step co-doping (e.g., W and Al two-step co-doped Li[Ni_{0.87}Co_{0.10}Al_{0.03}]O₂), the precursor is first mixed with lithium and aluminum and undergoes primary heat treatment. Then, an additional dopant (e.g., W) is introduced into the primary heat-treated material, followed by secondary heat treatment to complete the doping process.

### Wet + Dry Co-Doping Process

A combination of wet and dry doping can also be used:
First, the wet-doped precursor obtained in Example 3 is prepared. It is then mixed with lithium sources (LiOH or Li₂CO₃) and additional dopants (e.g., Nb₂O₅, Al₂O₃, etc.). Pre-calcination is performed at 450°C for 5 hours. Main calcination follows at 700-900°C, yielding the final positive active material.

This co-doping strategy enhances the electrochemical performance and structural stability of the positive material, ensuring optimal lithium-ion diffusion and cycle stability.

### 5. Synthesis of Cobalt Wet-Coated Precursor

This example describes a method to enhance the conductivity and structural stability of the positive active material by adjusting the cobalt (Co) content through wet coating.

A composite metal hydroxide precursor synthesized through the co-precipitation reaction is used. The precursor surface is coated with Co(OH)₂ using a wet-coating method. The coating process involves adding ammonia (NH₄OH), cobalt sulfate (CoSO₄), and sodium hydroxide (NaOH) solutions into the reaction vessel to ensure uniform Co(OH)₂ deposition on the precursor surface. The coated precursor undergoes filtration and drying, resulting in a wet-coated precursor with a uniform Co(OH)₂ layer.

### 6. Dry Doping of Cobalt Wet-Coated Precursor

This example describes a method to further enhance performance by applying an additional dry doping process to the cobalt wet-coated precursor synthesized in Example 5. The wet-coated precursor is mixed with a lithium source (LiOH or Li₂CO₃) and dopants such as Nb₂O₅ or Ta₂O₅. Pre-calcination is performed at 450°C for 5 hours to stabilize the structure. Main calcination follows at 700-900°C, completing the formation of the final positive active material. This two-step process (wet coating + dry doping) enhances the electrochemical stability, conductivity, and cycle performance of the positive material.

### 7. Dry Doping for High-Temperature Stability

This example describes a method to enhance high-temperature stability of the positive active material through dry doping. Composite metal hydroxide is mixed with lithium hydroxide (LiOH) and Ta₂O₅ (Aldrich, 3N) in a molar ratio of (Ni+Co+Mn):Ta:Li = 0.995:0.005: 1.01. The mixture is heated at a ramping rate of 2°C/min and subjected to pre-calcination at 450°C for 5 hours. Main calcination is performed at 700-900°C to finalize the doping process.

### 8. Dry Co-Doping

This example describes a dry co-doping method that utilizes multiple dopants to further optimize performance. Composite metal hydroxide is mixed with lithium hydroxide (LiOH), aluminum hydroxide (Al(OH)₃, Aldrich, 3N), and molybdenum trioxide (MoO₃, Aldrich, 3N) in a molar ratio of (Ni+Co+Mn):Al:Mo:Li = 0.985:0.01:0.005:1.01. The same process as in Example 7 is followed, including pre-calcination at 450°C for 5 hours and main calcination at 700-900°C.

The synthesis methods described in these examples are designed to form a spinel-layered nanocomposite structure, optimizing the performance of lithium-ion secondary batteries. Compared to conventional positive active materials, the materials synthesized using these methods exhibit enhanced long-term cycle stability, high-rate charge/discharge performance, high-temperature stability, and high-voltage operation capabilities.

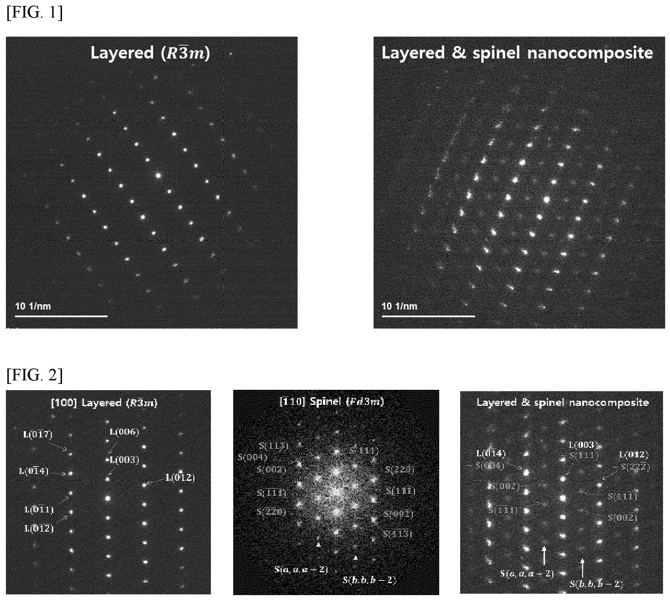

Fig. 1 and Fig. 2 are TEM (Transmission Electron Microscopy) images illustrating the characteristics of the Layered & Spinel Nanocomposite positive material according to the present embodiment.

Referring to Fig. 1 and Fig. 2, the positive material with a Layered & Spinel Nanocomposite crystal structure exhibits a distinctive SAED (Selected Area Electron Diffraction) pattern. Specifically, in addition to the layered (R3̅m̅) electron diffraction spots, spinel (Fd3m) structural patterns are also observed. This indicates that the positive material according to this embodiment possesses both layered and spinel structural characteristics simultaneously.

In other words, the positive material of the present invention is a nanocomposite in which the layered (R3̅m̅) structure and the spinel (Fd3m) structure coexist. The combination of these two structural characteristics significantly enhances the performance of lithium-ion batteries. Furthermore, the SAED pattern of the positive material in this embodiment shows electron diffraction spots corresponding to both [100] layered (R3̅m̅) and [110] spinel (Fd3m) structures.

The simultaneous presence of these two structures contributes to improving the electrical and chemical properties of the positive material. In particular, the lithium-ion mobility is enhanced, leading to improved electrochemical performance. These properties play a crucial role in extending battery lifespan and increasing capacity.

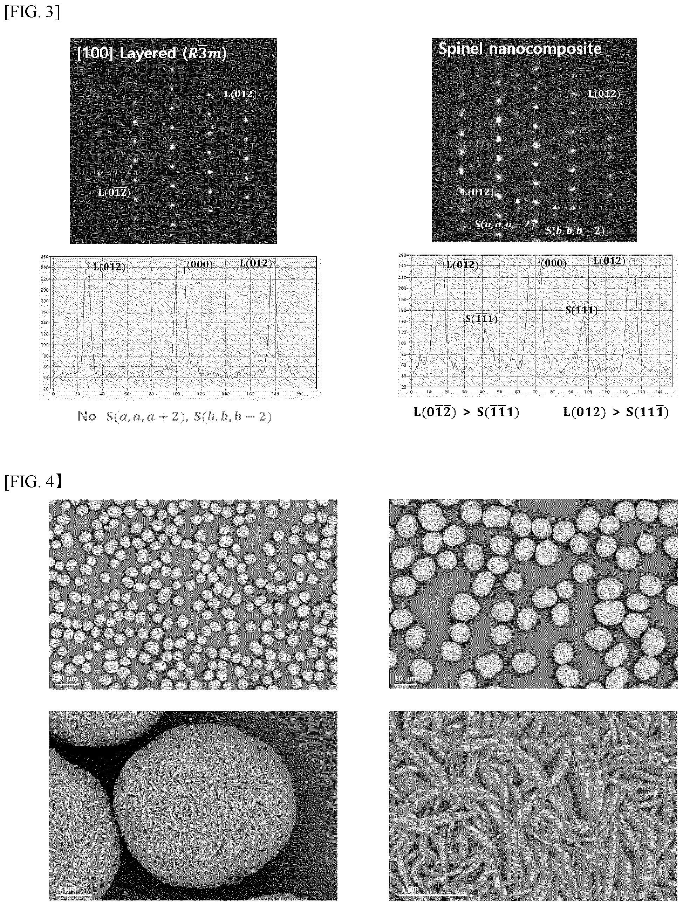

Fig. 3 is a graph illustrating the diffraction peak intensities of the layered structure and spinel structure.

Referring to Fig. 3, S(a,a,a+2) and S(b,b,b-2) represent diffraction spots at specific coordinates in the SAED pattern. In the [100] direction, diffraction spots corresponding to S(a,a,a+2) and S(b,b,b-2) are not observed.

In the TEM image of the layered (R3̅m̅) and spinel (Fd3m) nanocomposite, it is observed that **L(01̅2̅) > s(1̅1̅1)** and **L(012) > S(11 1̅ ).** Generalizing this, the relationship L(0,-1,-2-3(m-1)) > S(a,a,a+2) can be established from **L(01̅2̅) > S(1̅1̅1),** and similarly, L(0,1,2+3(m-1)) > S(b,b,b-2) can be derived from L(012) > **S(11 1̅ ).**

This implies that the diffraction peak intensity of the layered structure is stronger than that of the spinel structure.

The following section sequentially describes the evaluation results of various positive materials with the compositions listed below, tested at 2.7-4.3 V and 30°C.
[Ni-rich NCM Positive Materials]
Mo wet-doped Li[Ni_{0.98}Co_{0.01}Mn_{0.01}]O₂
Ta two-step doped Li[Ni_{0.94}Co_{0.04}Mn_{0.02}]O₂
Co wet-coated Li[Ni_{0.9}Co_{0.05}Mn_{0.05}]O₂
Sb dry-doped concentration-gradient Li[Ni_{0.9}Co_{0.05}Mn_{0.05}]O₂
Ti wet and Mo dry co-doped Li[Ni_{0.88}Co_{0.06}Mn_{0.06}]O₂

[Description of Mo Wet-Doped Li[Ni_{0.98}Co_{0.01}Mn_{0.01}]O₂ Ni-rich NCM Positive Material] Referring to Fig. 4 to Fig. 9, the characteristics of Mo wet-doped Li[Ni_{0.98}Co_{0.01}Mn_{0.01}]O₂, a Ni-rich NCM positive material, are described.

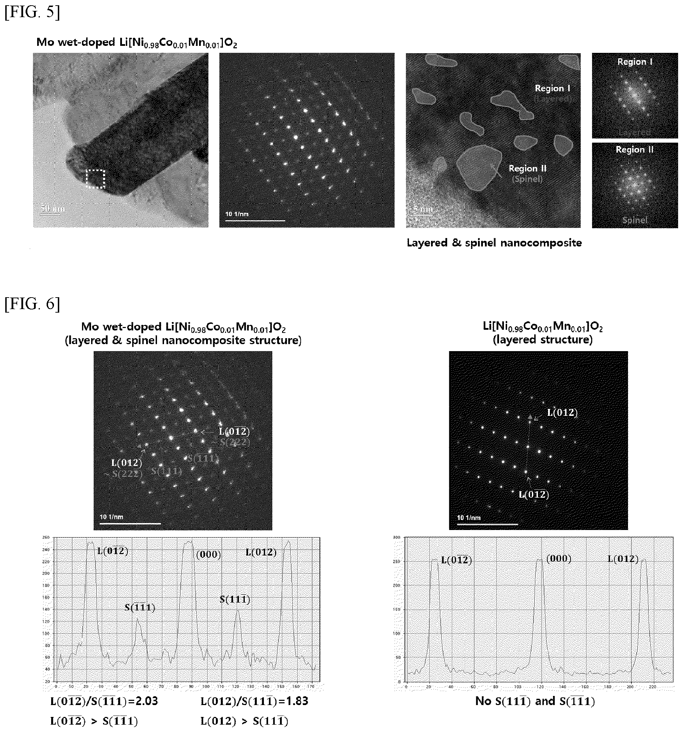

Fig. 4: SEM image of Mo wet-doped Li[Ni_{0.98}Co_{0.01}Mn_{0.01}]O₂ precursor according to one embodiment of the present invention. Fig. 5: TEM image showing the crystal structure of Mo wet-doped Li[Ni_{0.98}Co_{0.01}Mn_{0.01}]O₂. Fig. 6: Another TEM image illustrating the crystal structure of Mo wet-doped Li[Ni_{0.98}Co_{0.01}Mn_{0.01}]O₂ and conventional Li[Ni_{0.98}Co_{0.01}Mn_{0.01}]O₂.

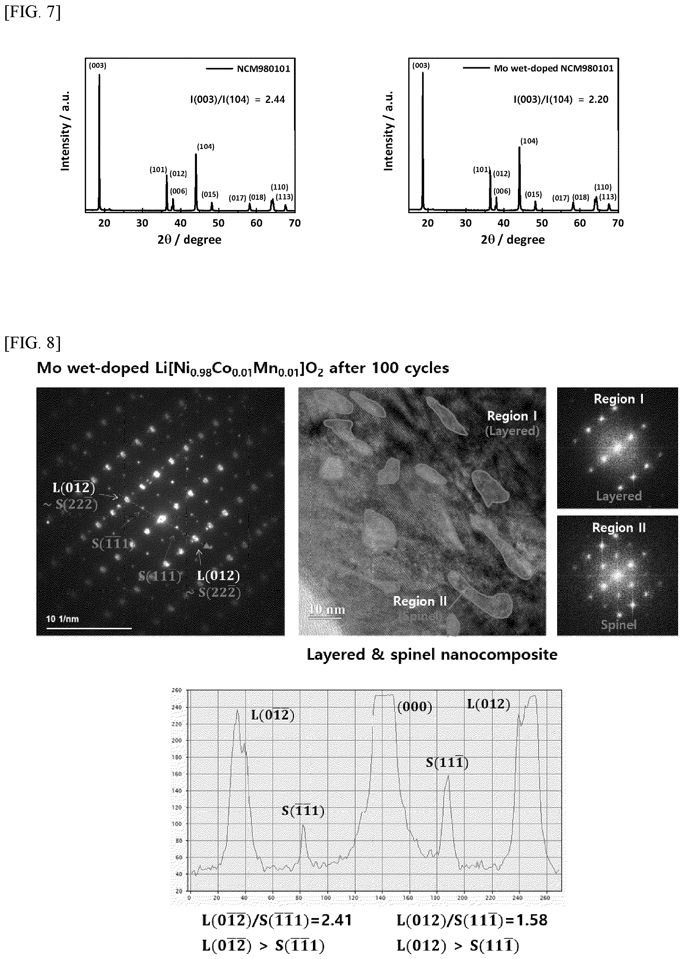

Fig. 7: XRD analysis graph showing the crystal structure of Mo wet-doped Li[Ni_{0.98}Co_{0.01}Mn_{0.01}]O₂ and conventional Li[Ni_{0.98}Co_{0.01}Mn_{0.01}]O₂. Fig. 8: TEM image illustrating the crystal structure of Mo wet-doped Li[Ni_{0.98}Co_{0.01}Mn_{0.01}]O₂ after 100 cycles.

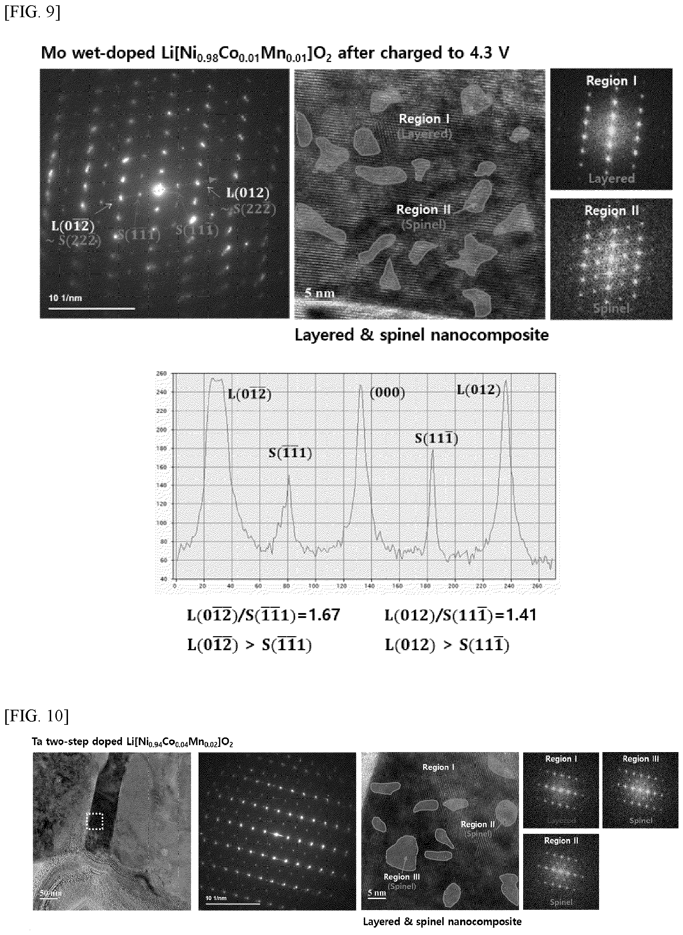

Fig. 9: TEM image showing the crystal structure of Mo wet-doped Li[Ni_{0.98}Co_{0.01}Mn_{0.01}]O₂ after being charged to 4.3V.

### (Structural Characteristics)

As shown in Fig. 4, the Mo wet-doped NCM980101 precursor is spherical with a particle size of approximately 10 µm in diameter.

As seen in Fig. 5, the SAED pattern confirms that both the layered structure and spinel structure coexist. In HR-TEM observations, the layered and spinel structures are found to be interwoven, forming a layered & spinel nanocomposite structure. FT patterns corresponding to different regions further validate the presence of distinct layered and spinel structures.

### (Comparison with Conventional Positive Material)

Referring to Fig. 6, both the Mo wet-doped Li[Ni_{0.98}Co_{0.01}Mn_{0.01}]O₂ and the comparison positive (Li[Ni_{0.98}Co_{0.01}Mn_{0.01}]O₂) exhibit diffraction peaks at L(01̅2̅)̅, L(000), and L(012), confirming the layered structure. However, peaks at S(**111̅**) and S(**1̅1̅1**)are observed only in the Mo wet-doped positive, indicating the presence of both layered and spinel structures in the present invention, while only the layered structure is found in the comparative example.

Referring to Fig. 7 and Table 1, the I(003)/I(104) ratio, which represents the degree of layered structure development, decreases in the spinel nanocomposite structure compared to the conventional layered positive. This confirms that the Mo wet-doped Li[Ni_{0.98}Co_{0.01}Mn_{0.01}]O₂ exhibits a mixed layered & spinel nanocomposite structure.

### Chemical Composition Analysis

Table 1 presents the chemical composition of Mo wet-doped Li[Ni_{0.98}Co_{0.01}Mn_{0.01}]O₂ and connectional Li[Ni_{0.98}Co_{0.01}Mn_{0.01}]O₂, as determined by ICP-OES analysis.

**[Table 1]**

| **Cathode material** | **Chemical composition (at%)** | | | |
|---|---|---|---|---|
| | **Ni** | **Co** | **Mn** | **Mo** |
| **NCM980101** | **98.1** | **1.1** | **0.8** | **-** |
| **Mo wet-doped NCM980101** | **97.3** | **0.9** | **1.0** | **0.8** |

By examining Table 2 and Table 3, it can be observed that the cycle life characteristics and rate capability of Mo wet-doped Li[Ni_{0.98}Co_{0.01}Mn_{0.01}]O₂ have significantly improved.

**[Table 2]**

| **Cathode** | **Spinel nanocomposite structure** | **0.1 C Disch. Capa (mAh/g)** | **Efficiency** | **0.2C Capacity (mAh/g)** | **0.2C/ 0.1C** | **0.5C Capacity (mAh/g)** | **0.5C/ 0.1C** | **Cycle** | **0.5C Cycle Retention** |
|---|---|---|---|---|---|---|---|---|---|
| **NCM980101** | **X** | **247.5** | **96.4%** | **236.2** | **95.4%** | **226.9** | **91.7%** | **100** | **75.1%** |
| **Mo wet-doped NCM980101** | **O** | **248.7** | **96.9%** | **231.7** | **95.6%** | **227.3** | **91.4%** | **100** | **89.5%** |

**[Table 3]**

| **Cathode** | **Spinel nanocomposite structure** | **0.2C Capacity (mAh/g)** | **0.5C Capacity (mAh/g) (0.5C/0.2C)** | **1C Capacity (mAh/g) (1C/0.2C)** | **2C (mAh/g) (2c/0.2C)** | **5C Capacity (mAh/g) (5C/0.2C)** | **10C Capacity (mAh/g) (5C/0.2C)** |
|---|---|---|---|---|---|---|---|
| **NCM980101** | **X** | **235.9** | **227.1** | **222.4** | **208.5** | **189.4** | **175.3** |
| **Mo wet-doped NCM980101** | **O** | **237.1** | **228.9** | **224.5** | **212.1** | **194.5** | **182.6** |

### Enhancement of Rate Capability and Structural Stability

The formation of a 3D Li⁺ diffusion pathway, a key characteristic of the spinel structure, significantly improves the rate capability of the Mo wet-doped Li[Ni_{0.98}Co_{0.01}Mn_{0.01}]O₂ positive material.

By analyzing Fig. 8 (TEM image after 100 cycles) and Fig. 9 (TEM image after charging to 4.3V), it is evident that the spinel and layered structures, which were already present before cycling, remain well-preserved within the positive material even after multiple cycles.

### Comparison with Conventional Layered Positives

In general, layered positive materials tend to degrade after cycling or in a charged state, where the surface layered structure of particles transitions into a spinel or rock-salt phase. This degradation occurs due to interactions between the positive material and the electrolyte, leading to the formation of a degraded surface layer on primary particles.

However, in the layered & spinel nanocomposite structure of the present invention, the spinel structure is well-maintained within the interior of the particles even after 100 cycles. Since the spinel phase does not develop on the surface of the positive, this structure does not indicate degradation but instead suggests improved structural stability of the positive material. The pre-formed spinel structure remains intact throughout the cycling process, leading to an overall improvement in the cycle life characteristics.

Additionally, the presence of the spinel structure provides a 3D Li⁺ diffusion pathway, which enhances lithium-ion mobility during the charge and discharge process. The development of the spinel structure in the charged state contributes to improving the rate performance of the positive material, making it more suitable for high-power applications.

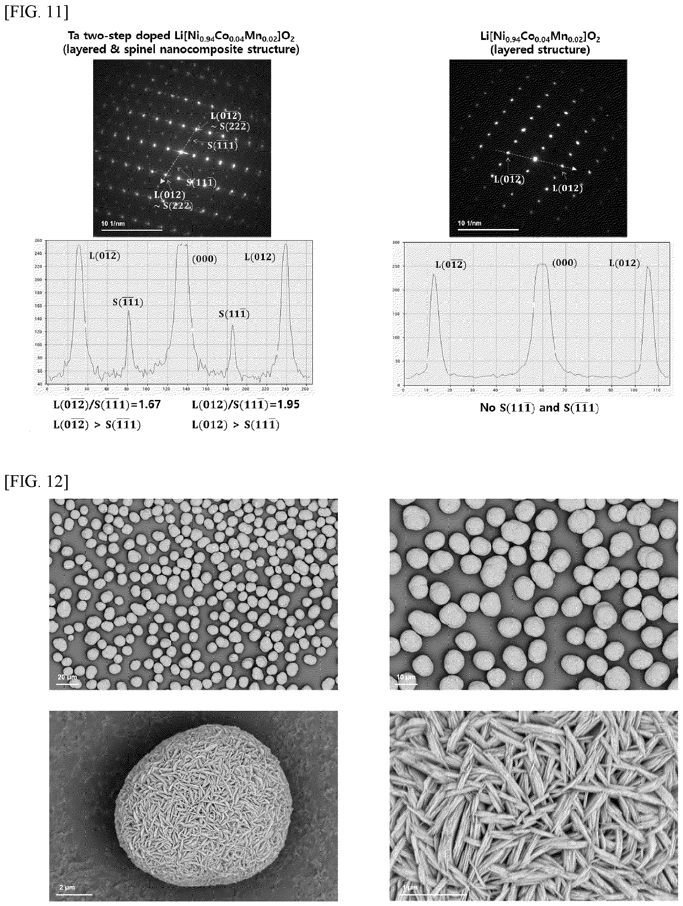

[Description of Ta Two-Step Doped Li[Ni_{0.94}Co_{0.04}Mn_{0.02}]O₂ Ni-rich NCM Positive Material] Referring to Fig. 10 and Fig. 11, the structural characteristics of Ta two-step doped Li[Ni_{0.94}Co_{0.04}Mn_{0.02}]O₂, a Ni-rich NCM positive material, are described. Fig. 10: TEM image showing the crystal structure of Ta two-step doped Li[Ni_{0.94}Co_{0.04}Mn_{0.02}]O₂. Fig. 11: Another TEM image illustrating the crystal structure of Ta two-step doped Li[Ni_{0.94}Co_{0.04}Mn_{0.02}]O₂ and conventional Li[Ni_{0.94}Co_{0.04}Mn_{0.02}]O₂.

### (Structural Characteristics)

As shown in Fig. 10, the SAED pattern confirms that both layered and spinel structures coexist. HR-TEM observations further reveal that the layered and spinel structures are interwoven, forming a layered & spinel nanocomposite structure. The FT patterns corresponding to different regions validate the presence of distinct layered and spinel phases. Referring to Fig. 11, both the Ta two-step doped Li[Ni_{0.94}Co_{0.04}Mn_{0.02}]O₂ and the comparison positive (Li[Ni_{0.98}Co_{0.01}Mn_{0.01}]O₂) exhibit diffraction peaks at L(01̅2̅)̅, L(000), and L(012), confirming the layered structure. However, peaks at S(**111̅**) and S(**1̅1̅1**) are observed only in the Ta two-step doped positive, indicating the presence of both layered and spinel structures, which are absent in the comparative example.

### (Chemical Composition and Performance Evaluation)

Table 4 presents the chemical composition of Ta two-step doped Li[Ni_{0.94}Co_{0.04}Mn_{0.02}]O₂ and conventional Li[Ni_{0.94}Co_{0.04}Mn_{0.02}]O₂, analyzed using ICP-OES. Table 5 shows the cycle life characteristics, demonstrating improved capacity retention over extended charge-discharge cycles compared to conventional positives. Table 6 evaluates the rate capability, indicating that the Ta two-step doped positive material exhibits enhanced lithium-ion transport and maintains higher discharge capacities at elevated charge-discharge rates.

**[Table 4]**

| **Cathode material** | **Chemical composition (at%)** | | | |
|---|---|---|---|---|
| | **Ni** | **Co** | **Mn** | **Ta** |
| **NCM940402** | **93.8** | **4.1** | **2.1** | **-** |
| **Ta two-step doped NCM940402** | **93.4** | **3.8** | **1.7** | **1.1** |

The presence of the spinel nanocomposite structure results in a similar I(003)/I(104) ratio as observed in Fig. 7, indicating that the development of the layered crystal structure is reduced compared to the conventional positive material. This confirms that the incorporation of the spinel phase within the layered structure affects the overall crystallinity, leading to a lower I(003)/I(104) ratio than that of the standard layered positive.

**[Table 5]**

| **Cathode** | **Spinel nanocomposite structure** | **0.1 C Disch. Capa (mAh/g)** | **Efficiency** | **0.2C Capacity (mAh/g)** | **0.2C/ 0.1C** | **0.5C Capacity (mAh/g)** | **0.5C/ 0.1C** | **Cycle** | **0.5C Cycle Retention** |
|---|---|---|---|---|---|---|---|---|---|
| **NCM940402** | **X** | **240.2** | **96.5%** | **233.4** | **97.2%** | **222.2** | **92.5%** | **100** | **79.1%** |
| **Ta two-step doped NCM940402** | **O** | **240.9** | **96.7%** | **234.9** | **97.5%** | **223.8** | **92.9%** | **100** | **90.9%** |

The formation of the layered & spinel nanocomposite crystal structure effectively disperses the strain that typically develops in the layered crystal structure of Ni-rich positives during charge-discharge cycles. This strain relaxation significantly enhances the cycle life characteristics, demonstrating that the nanocomposite structure improves the structural stability of the positive material, thereby preventing rapid degradation and extending battery lifespan.

**[Table 6]**

| **Cathode** | **Spinel nanocomposite structure** | **0.2C Capacity (mAh/g)** | **0.5C Capacity (mAh/g) (0.5C/0.2C)** | **1C Capacity (mAh/g) (1C/0.2C)** | **2C Capacity (mAh/g) (2C/0.2C)** | **5C Capacity (mAh/g) (5C/0.2C)** | **10C Capacity (mAh/g) (5C/0.2C)** |
|---|---|---|---|---|---|---|---|
| **NGM940d02** | **X** | **234.1** | **223.1** | **217.5** | **204.3** | **185.1** | **169.7** |
| **Ta two-step doped NCM940402** | **O** | **234.1** | **224.1** | **219.8** | **208.4** | **190.1** | **178.5** |

In the case of Ta two-step doped Li[Ni_{0.94}Co_{0.04}Mn_{0.02}]O₂ according to this embodiment, the formation of the 3D Li⁺ diffusion pathway, a key characteristic of the spinel structure, significantly enhances the rate capability. This structural advantage facilitates more efficient lithium-ion transport, allowing the positive material to sustain higher discharge capacities at elevated charge-discharge rates, thereby improving its overall electrochemical performance.

[Description of Co Wet-Coated [Ni_{0.9}Co_{0.05}Mn_{0.05}](OH)₂ Precursor and Its Positive Material] Referring to Fig. 12 to Fig. 17, the characteristics of the Co wet-coated [Ni_{0.9}Co_{0.05}Mn_{0.05}](OH)₂ precursor and its derived positive material are described.

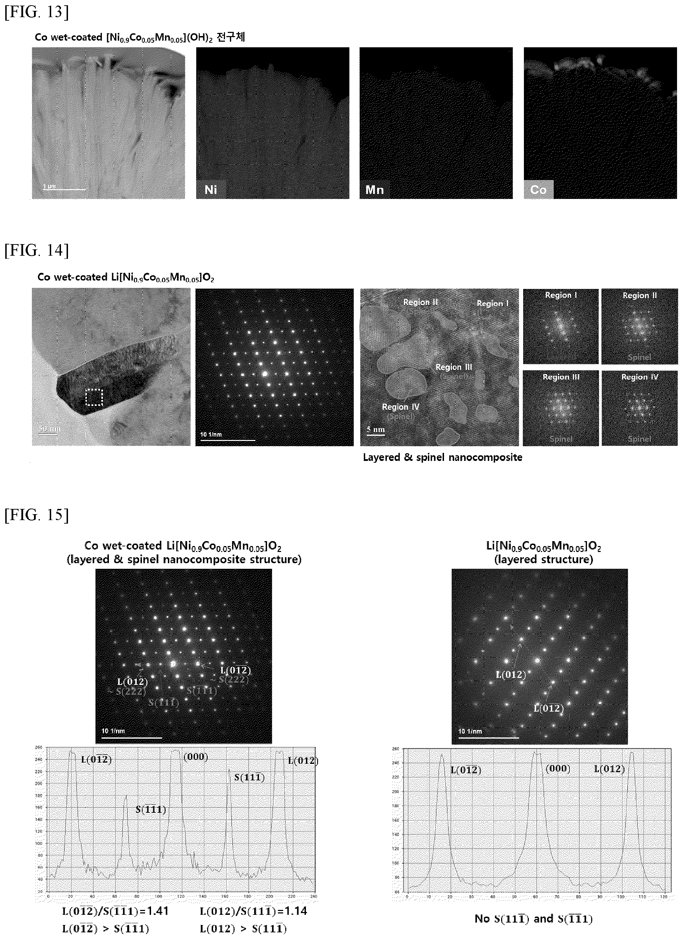

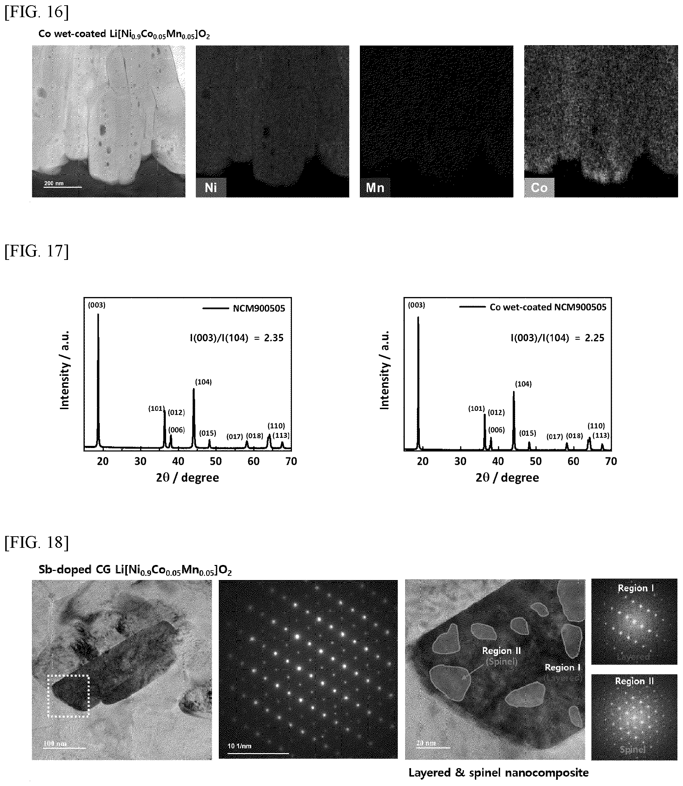

Fig. 12: SEM image of Co wet-coated [Ni_{0.9}Co_{0.05}Mn_{0.05}](OH)₂ precursor. Fig. 13: Cross-sectional TEM-EDS image of Co wet-coated [Ni_{0.9}Co_{0.05}Mn_{0.05}](OH)₂ precursor. Fig. 14 and Fig. 15: TEM images showing the crystal structure of Co wet-coated Li[Ni_{0.9}Co_{0.05}Mn_{0.05}]O₂ and conventional [Ni_{0.9}Co_{0.05}Mn_{0.05}](OH)₂. Fig. 16: TEM-EDS image of Co wet-coated [Ni_{0.9}Co_{0.05}Mn_{0.05}](OH)₂ positive material. Fig. 17: XRD analysis graph showing the crystal structure of Co wet-coated [Ni_{0.9}Co_{0.05}Mn_{0.05}](OH)₂ and conventional [Ni_{0.9}Co_{0.05}Mn_{0.05}](OH)₂.

### (Structural Characteristics)

As shown in Fig. 12, the Co wet-coated [Ni_{0.9}Co_{0.05}Mn_{0.05}](OH)₂ precursor is spherical with a particle size of approximately 10 µm in diameter.

Referring to Fig. 13, TEM-EDS analysis of the Co wet-coated [Ni_{0.9}Co_{0.05}Mn_{0.05}](OH)₂ precursor cross-section reveals a clearly distinguishable Co coating layer on the particle surface, confirming the uniform distribution of the coating.

Examining the TEM image of Co wet-coated [Ni_{0.9}Co_{0.05}Mn_{0.05}](OH)₂ in Fig. 14, the SAED pattern confirms the simultaneous presence of both layered and spinel structures. Furthermore, HR-TEM analysis reveals that the layered and spinel structures are interwoven, forming a mixed nanocomposite structure.

Additionally, analyzing the FT patterns corresponding to different regions verifies the distinct existence of both layered and spinel structures.

This confirms that the Co wet-coated [Ni_{0.9}Co_{0.05}Mn_{0.05}](OH)₂ precursor, according to this embodiment, possesses a layered & spinel nanocomposite crystal structure, contributing to improved electrochemical performance.

Referring to Fig. 15, both the Co wet-coated Li[Ni_{0.9}Co_{0.05}Mn_{0.05}]O₂ and the comparison positive (Li[Ni_{0.98}Co_{0.01}Mn_{0.01}]O₂) exhibit diffraction peaks at L(01̅2̅)̅, L(000), and L(012), confirming the layered structure. However, peaks at S(**111̅**) and S(**1̅1̅1**) are observed only in the Co wet-coated positive, confirming the presence of both layered and spinel structures, which are absent in the comparative example.

### (Coating Confirmation and Electrochemical Performance)

As shown in Fig. 16, TEM-EDS analysis of the Co wet-coated Li[Ni_{0.9}Co_{0.05}Mn_{0.05}]O₂ positive confirms that the Co coating layer is prominently observed on the particle surface, ensuring enhanced electrochemical stability.

Additionally, as presented in Table 7 and Fig. 17, the presence of the spinel nanocomposite structure leads to a reduction in the I(003)/I(104) ratio, which represents the degree of layered structure development. This reduction, compared to the standard layered positive, confirms the formation of a layered & spinel nanocomposite structure.

Table 7 presents the chemical composition of Co wet-coated Li[Ni_{0.9}Co_{0.05}Mn_{0.05}]O₂ and conventional [Ni_{0.9}Co_{0.05}Mn_{0.05}](OH)₂, analyzed using ICP-OES, validating the uniform incorporation of the Co coating and its intended stoichiometry.

**[Table 7]**

| **Cathode material** | **Chemical composition (at%)** | | |
|---|---|---|---|
| | **Ni** | **Co** | **Mn** |
| **NCM900505** | **90.1** | **4.6** | **5.3** |
| **Co wet-coated NCM900505** | **87.1** | **8.4** | **4.5** |

**[Table 8]**

| **Cathode** | **Spinel nanocomposite structure** | **0.1 C Disch. Capa (mAh/g)** | **Efficiency** | **0.2C Capacity (mAh/g)** | **0.2C/ 0.1C** | **0.5C Capacity (mAh/g)** | **0.5C/ 0.1C** | **Cycle** | **0.5C Cycle Retention** |
|---|---|---|---|---|---|---|---|---|---|
| **NCM900505** | **X** | **232.1** | **96.7%** | **226.5** | **97.696** | **219.3** | **94.5%** | **100** | **84.6%** |
| **Co wet-coated NCM900505** | **O** | **231.7** | **97.2%** | **225.1** | **97.1%** | **217.1** | **93.7%** | **100** | **93.2%** |

**[Table 9]**

| **Cathode** | **Spinel nanocomposite structure** | **0.2C Capacity (mAh/g)** | **0.5C Capacity (mAh/g) (0.5C/0.2C)** | **1C Capacity (mAh/g) (1C/0.2C)** | **2C Capacity (mAh/g) (2C/0.2C)** | **5C Capacity (mAh/g) (5C/0.2C)** | **10C Capacity (mAh/g) (5C/0.2C)** |
|---|---|---|---|---|---|---|---|
| **NCM 900505** | **X** | **226.8** | **213.7** | **208.2** | **194.7** | **173.8** | **160.4** |
| **Co wet-coated NCM900505** | **O** | **225.9** | **211.9** | **209.4** | **198.6** | **178.7** | **168.5** |

Referring to Table 8 and Table 9, it can be observed that the Co wet-coated Li[Ni_{0.9}Co_{0.05}Mn_{0.05}]O₂ positive material exhibits improvements in capacity, rate capability, and cycle life characteristics.

The formation of the layered & spinel nanocomposite crystal structure effectively disperses the strain that typically develops in the layered structure of Ni-rich positives during charge-discharge cycles. This strain relaxation significantly enhances the cycle life characteristics, demonstrating that the nanocomposite structure improves the structural stability of the positive material, preventing rapid degradation and extending battery lifespan.

These results confirm that the Co wet-coated Li[Ni_{0.9}Co_{0.05}Mn_{0.05}]O₂ positive material provides superior electrochemical performance, making it a promising candidate for high-performance lithium-ion batteries.

Additionally, the formation of the 3D Li⁺ diffusion pathway, a key characteristic of the spinel structure, significantly enhances the rate capability of Co wet-coated Li[Ni_{0.9}Co_{0.05}Mn_{0.05}]O₂. This structural advantage facilitates more efficient lithium-ion transport, allowing the positive material to maintain higher discharge capacities at elevated charge-discharge rates, thereby improving its overall electrochemical performance.

### [Description of Sb Dry-Doped Concentration-Gradient [Ni_{0.9}Co_{0.05}Mn_{0.05}](OH)₂ Ni-rich NCM Positive Material]

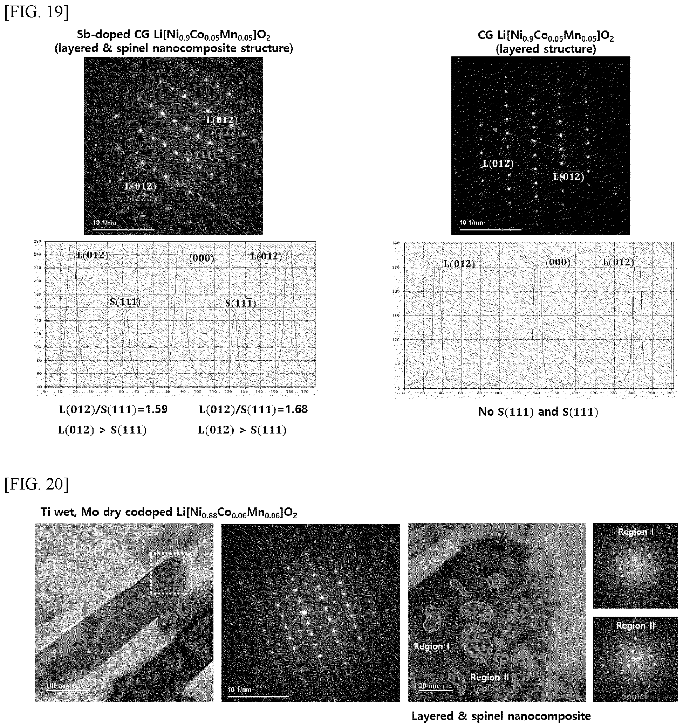

Referring to Fig. 18 and Fig. 19, the characteristics of Sb dry-doped concentration-gradient Li[Ni_{0.9}Co_{0.05}Mn_{0.05}]O₂ positive material are described. Fig. 18: TEM image showing the crystal structure of Sb dry-doped concentration-gradient [Ni_{0.9}Co_{0.05}Mn_{0.05}](OH)₂. Fig. 19: Another TEM image illustrating the crystal structure of Sb dry-doped concentration-gradient [Ni_{0.9}Co_{0.05}Mn_{0.05}](OH)₂ and conventional Li[Ni_{0.9}Co_{0.05}Mn_{0.05}]O₂.

### (Structural Characteristics)

Examining the TEM image in Fig. 18, the SAED pattern confirms the coexistence of both layered and spinel structures. Furthermore, HR-TEM analysis reveals that these structures are interwoven, forming a layered & spinel nanocomposite structure. The FT patterns corresponding to different regions confirm the presence of distinct layered and spinel phases. This demonstrates that the Sb dry-doped concentration-gradient [Ni_{0.9}Co_{0.05}Mn_{0.05}](OH)₂ precursor, according to this embodiment, possesses a layered & spinel nanocomposite crystal structure, which contributes to improved electrochemical performance.

Referring to Fig. 19, both the Sb dry-doped concentration-gradient Li[Ni_{0.9}Co_{0.05}Mn_{0.05}]O₂ and the comparison positive (Li[Ni_{0.98}Co_{0.01}Mn_{0.01}]O₂) exhibit diffraction peaks at L(01̅2̅)̅, L(000), and L(012), confirming the layered structure. However, peaks at S(**111̅**) and S(**1̅1̅1**) are observed only in the Sb dry-doped positive, confirming the presence of both layered and spinel structures, which are absent in the comparative example.

Table 10 presents the chemical composition of Sb dry-doped concentration-gradient [Ni_{0.9}Co_{0.05}Mn_{0.05}](OH)₂ and conventional concentration-gradient [Ni_{0.9}Co_{0.05}Mn_{0.05}](OH)₂, analyzed using ICP-OES.

Table 11 evaluates the electrochemical performance (capacity and cycle life characteristics), demonstrating that the Sb dry-doped positive material exhibits enhanced capacity retention and long-term stability. Table 12 assesses the rate capability, indicating that the Sb dry-doped concentration-gradient positive material maintains higher discharge capacities at increased charge-discharge rates, confirming improved high-rate performance.

The results confirm that Sb dry doping combined with a concentration-gradient structure enhances both structural stability and electrochemical performance, making [Ni_{0.9}Co_{0.05}Mn_{0.05}](OH)₂ a promising positive material for next-generation lithium-ion batteries.

**[Table 10]**

| **Cathode material** | **Chemical composition (at%)** | | | |
|---|---|---|---|---|
| | **Ni** | **Co** | **Mn** | **Sb** |
| **CG NCM900505** | **89.6** | **4.8** | **5.6** | **-** |
| **Sb-doped CG NCM900505** | **87.1** | **7.9** | **4.5** | **0.5** |

**[Table 11]**

| **Cathode** | **Spinel nanocomposite structure** | **0.1 C Disch. Capa (mAh/g]** | **Efficiency** | **0.2C Capacity (mAh/g)** | **0.2C/ 0.1C** | **0.5C Capacity (mAh/g)** | **0.5C/ 0.1C** | **Cycle** | **0.5C Cycle Retention** |
|---|---|---|---|---|---|---|---|---|---|
| **CG NCM900505** | **x** | **232.2** | **96.9%** | **227.1** | **97.8%** | **220.4** | **94.996** | **100** | **89.4%** |
| **Sb-doped CG NCM900505** | **o** | **232.4** | **96.9%** | **227.4** | **97.9%** | **220.5** | **94.9%** | **100** | **94.2%** |

**[Table 12]**

| **Cathode** | **Spinel nanocomposite structure** | **0.2C Capacity (mAh/g)** | **0.5C Capacity (mAh/g) (0.5/0.2C)** | **1C Capacity (mAh/g) (1C/0.2)** | **2C Capacity(mAh/g) (2C/0.2C)** | **5C Capacity (mAh/g) (5C/0.2C)** | **10C Capacity (mAh/g) (5C/0.2C)** |
|---|---|---|---|---|---|---|---|
| **CG NCM900505** | **x** | **228.1** | **221.9** | **215.8** | **201.4** | **178.9** | **162.1** |
| **Sb-doped CG NCM900505** | **o** | **228.5** | **222.1** | **216.9** | **203.8** | **184.4** | **171.8** |

The formation of the layered & spinel nanocomposite crystal structure effectively disperses strain that typically develops in the layered structure of Ni-rich positives during charge-discharge cycles. This strain relaxation significantly enhances the cycle life characteristics, preventing structural degradation and extending the battery lifespan.

Additionally, the presence of the spinel structure provides a 3D Li⁺ diffusion pathway, which facilitates more efficient lithium-ion transport. This structural advantage leads to a significant improvement in rate capability, allowing the positive material to maintain higher discharge capacities at elevated charge-discharge rates, thus enhancing overall electrochemical performance.

### [Description of Ti Wet-Doped & Mo Dry-Co-Doped Li[Ni_{0.88}Co_{0.06}Mn_{0.06}]O₂ Ni-rich NCM Positive Material]

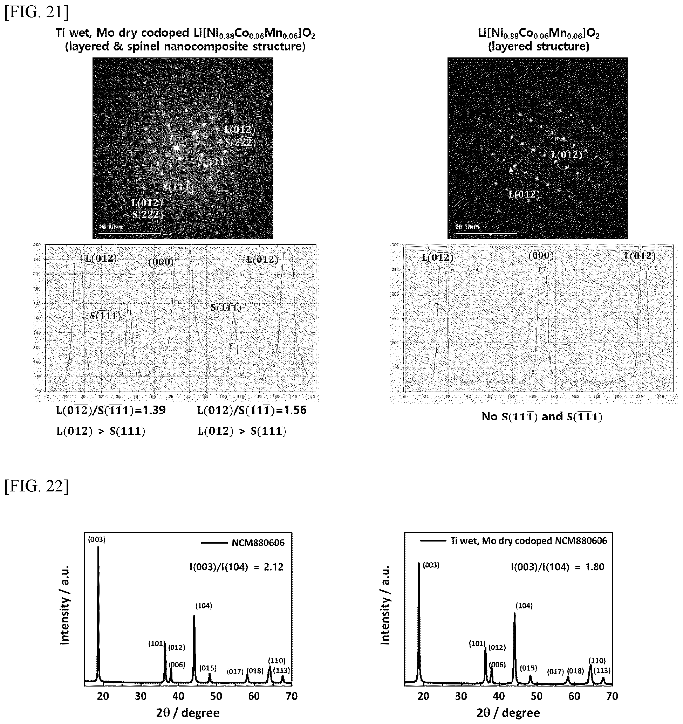

Referring to Fig. 20 to Fig. 22, the characteristics of Ti wet-doped & Mo dry-co-doped Li[Ni_{0.88}Co_{0.06}Mn_{0.06}]O₂ positive material are described. Fig. 20 and Fig. 21: TEM images illustrating the crystal structure of Ti wet-doped & Mo dry-co-doped Li[Ni_{0.88}Co_{0.06}Mn_{0.06}]O₂. Fig. 22: XRD analysis graph showing the crystal structure of Ti wet-doped & Mo dry-co-doped Li[Ni_{0.88}Co_{0.06}Mn_{0.06}]O₂ and conventional Li[Ni_{0.88}Co_{0.06}Mn_{0.06}]O₂.

### (Structural Characteristics)

Examining the TEM image in Fig. 20, the SAED pattern confirms the coexistence of both layered and spinel structures. Furthermore, HR-TEM analysis reveals that these structures are interwoven, forming a layered & spinel nanocomposite structure. The FT patterns corresponding to different regions confirm the presence of distinct layered and spinel phases. This demonstrates that the Ti wet-doped & Mo dry-co-doped Li[Ni_{0.88}Co_{0.06}Mn_{0.06}]O₂, according to this embodiment, possesses a layered & spinel nanocomposite crystal structure, which contributes to improved electrochemical performance.

Referring to Fig. 21, both the Ti wet-doped & Mo dry-co-doped Li[Ni_{0.88}Co_{0.06}Mn_{0.06}]O₂ and the comparison positive (Li[Ni_{0.88}Co_{0.06}Mn_{0.06}]O₂) exhibit diffraction peaks at L(01̅2̅)̅, L(000), and L(012), confirming the layered structure. However, peaks at S(**111̅**) and S(**1̅1̅1**) are observed only in the Ti wet & Mo dry-co-doped positive, confirming the presence of both layered and spinel structures, which are absent in the comparative example.

Referring to Table 13 and Fig. 22, the I(003)/I(104) ratio, which represents the degree of layered structure development, decreases from 2.12 in the standard positive to 1.80 in the Ti wet & Mo dry-co-doped positive. This reduction confirms the formation of a layered & spinel nanocomposite structure, which plays a crucial role in enhancing the structural stability and electrochemical performance of the positive material.

Table 13 presents the chemical composition of Ti wet-doped & Mo dry-co-doped Li[Ni_{0.88}Co_{0.06}Mn_{0.06}]O₂, analyzed using ICP-OES, validating the uniform incorporation of dopants and their effect on material performance. Table 14 and Table 15 present the electrochemical performance of Ti wet-doped & Mo dry-co-doped Li[Ni_{0.88}Co_{0.06}Mn_{0.06}]O₂, including capacity, cycle life characteristics, and rate capability.

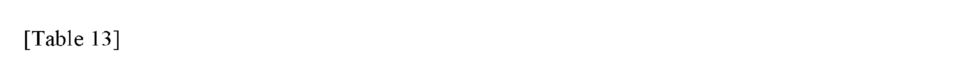

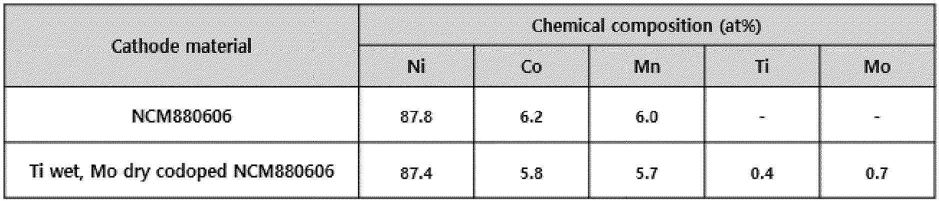

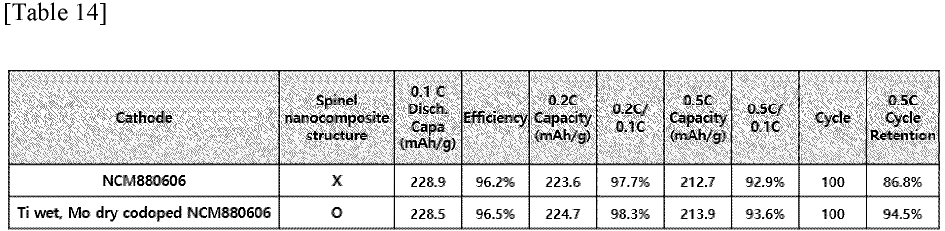

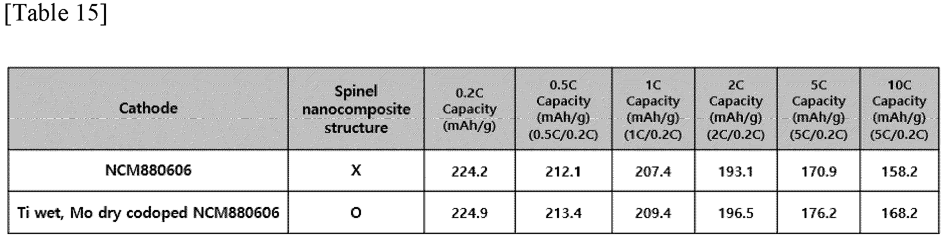

As described above, the formation of the layered & spinel nanocomposite crystal structure effectively disperses the strain that typically develops in the layered structure of Ni-rich positives during charge-discharge cycles. This strain relaxation significantly enhances the cycle life characteristics, preventing structural degradation and extending the battery lifespan. Additionally, the presence of the spinel structure provides a 3D Li⁺ diffusion pathway, which facilitates more efficient lithium-ion transport. This structural advantage leads to a significant improvement in rate capability, allowing the positive material to maintain higher discharge capacities at elevated charge-discharge rates, thereby enhancing overall electrochemical performance.

The following section sequentially describes the evaluation results of the Ni-rich NCA positive materials with the compositions listed below, tested at 2.7-4.3 V and 30°C.
Ni-rich NCA Positive Materials
Ta, Al dry co-doped Li[Ni_{0.89}Co_{0.1}Al_{0.01}]O₂
W, Al two-step co-doped Li[Ni_{0.87}Co_{0.10}Al_{0.03}]O₂

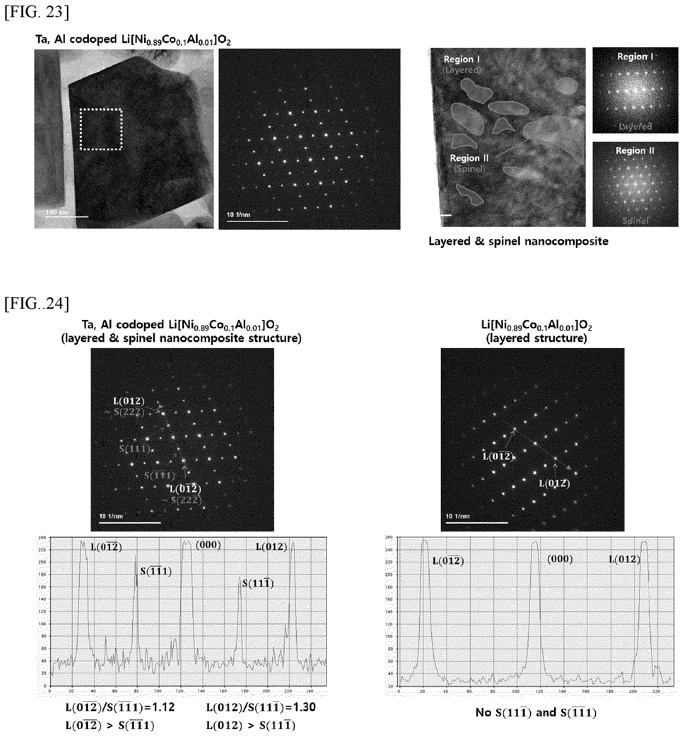

[Description of Ta, Al Dry Co-Doped Li[Ni_{0.89}Co_{0.1}Al_{0.01}]O₂ Ni-rich NCA Positive Material] Referring to Fig. 23 and Fig. 24, the characteristics of Ta, Al dry co-doped Li[Ni_{0.89}Co_{0.1}Al_{0.01}]O₂ positive material are described. Fig. 23 and Fig. 24: TEM images illustrating the crystal structure of Ta, Al dry co-doped Li[Ni_{0.89}Co_{0.1}Al_{0.01}]O₂ and conventional Li[Ni_{0.89}Co_{0.1}Al_{0.01}]O₂.

### (Structural Characteristics)

Examining the TEM image in Fig. 23, the SAED pattern confirms the coexistence of both layered and spinel structures. Furthermore, HR-TEM analysis reveals that these structures are interwoven, forming a layered & spinel nanocomposite structure. The FT patterns corresponding to different regions confirm the presence of distinct layered and spinel phases. This demonstrates that the Ta, Al dry co-doped Li[Ni_{0.89}Co_{0.01}Al_{0.01}]O₂, according to this embodiment, possesses a layered & spinel nanocomposite crystal structure, contributing to improved electrochemical performance.

Referring to Fig. 24, both the Ta, Al dry co-doped Li[Ni_{0.89}Co_{0.1}Al_{0.01}]O₂ and the comparison positive (Li[Ni_{0.89}Co_{0.1}Al_{0.01}]O₂) exhibit diffraction peaks at L(01̅2̅)̅, L(000), and L(012), confirming the layered structure. However, peaks at S(**111̅**) and S(**1̅1̅1**) are observed only in the Ta, Al dry co-doped positive, confirming the presence of both layered and spinel structures, which are absent in the comparative example.

The following **Table 16** presents the chemical composition (ICP-OES analysis) of Ta, Al dry co-doped Li[Ni_{0.89}Co_{0.1}Al_{0.01}]O₂ and conventional Li[Ni_{0.89}Co_{0.1}Al_{0.01}]O₂.

Additionally, **Tables 17** and **18** show the electrochemical performance (capacity, cycle life characteristics, and rate capability) of Ta, Al dry co-doped Li[Ni_{0.89}Co_{0.1}Al_{0.01}]O₂ and conventional Li[Ni_{0.89}Co_{0.1}Al_{0.01}]O₂.

The results confirm that Ta, Al dry co-doping enhances both structural stability and electrochemical performance, making Li[Ni_{0.89}Co_{0.1}Al_{0.01}]O₂ a promising positive material for next-generation lithium-ion batteries.

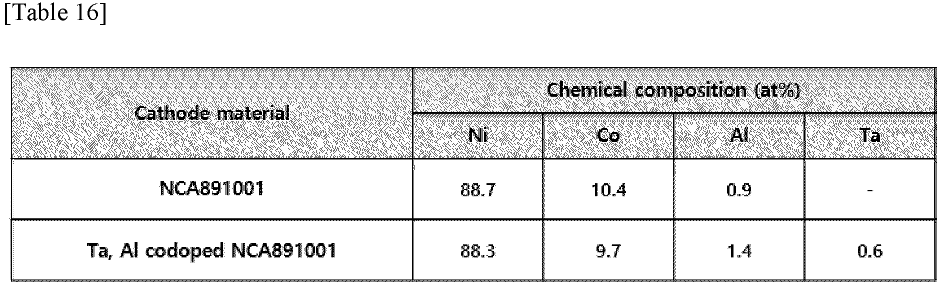

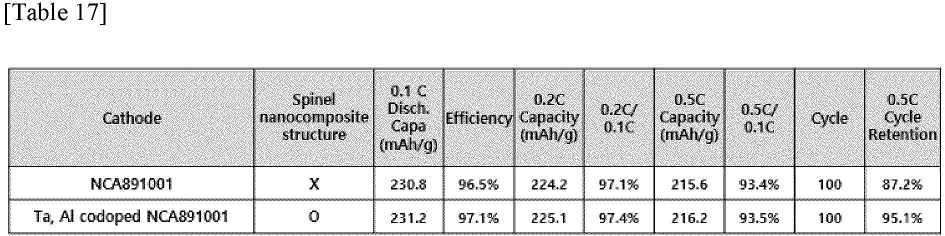

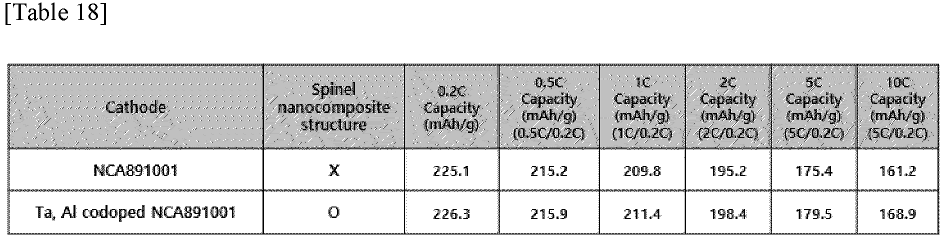

The formation of the layered & spinel nanocomposite crystal structure effectively disperses the strain that typically develops in the layered structure of Ni-rich positives during charge-discharge cycles. This strain relaxation significantly enhances the cycle life characteristics, preventing structural degradation and extending the battery lifespan.

Additionally, the presence of the spinel structure provides a 3D Li⁺ diffusion pathway, which facilitates more efficient lithium-ion transport. This structural advantage leads to a significant improvement in rate capability, allowing the positive material to maintain higher discharge capacities at elevated charge-discharge rates, thereby enhancing overall electrochemical performance.

### [Description of W, Al Two-Step Co-Doped Li[Ni_{0.87}Co_{0.10}Al_{0.03}]O₂ Ni-rich NCA Positive Material]

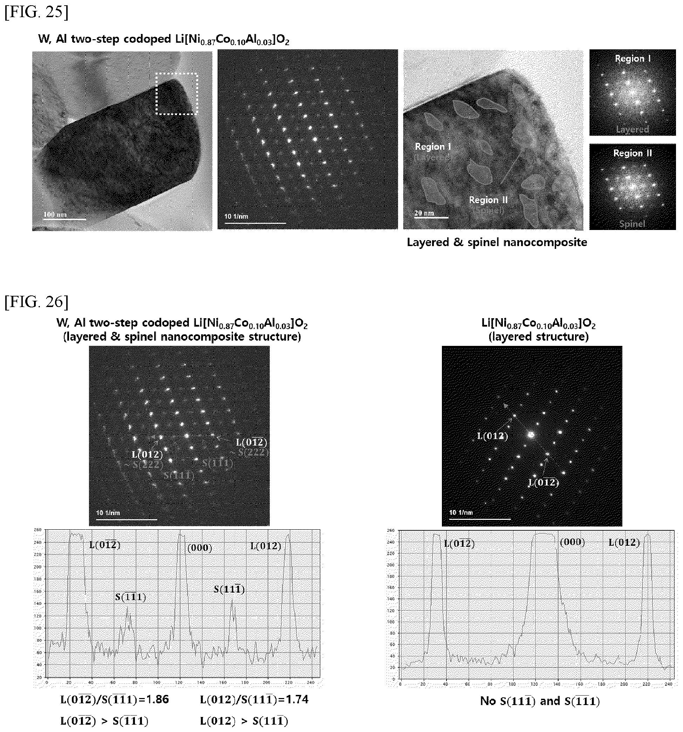

Referring to Fig. 25 and Fig. 26, the characteristics of W, Al two-step co-doped Li[Ni_{0.87}Co_{0.10}Al_{0.03}]O₂ positive material are described. Fig. 25 and Fig. 26: TEM images illustrating the crystal structure of W, Al two-step co-doped Li[Ni_{0.87}Co_{0.10}Al_{0.03}]O₂ and conventional Li[Ni_{0.87}Co_{0.10}Al_{0.03}]O₂.

### (Structural Characteristics)

Examining the TEM image in Fig. 25, the SAED pattern confirms the coexistence of both layered and spinel structures. Furthermore, HR-TEM analysis reveals that these structures are interwoven, forming a layered & spinel nanocomposite structure. The FT patterns corresponding to different regions confirm the presence of distinct layered and spinel phases. This demonstrates that the W, Al two-step co-doped Li[Ni_{0.87}Co_{0.10}Al_{0.03}]O₂, according to this embodiment, possesses a layered & spinel nanocomposite crystal structure, contributing to improved electrochemical performance.

Referring to Fig. 26, both the W, Al two-step co-doped Li[Ni_{0.87}Co_{0.10}Al_{0.03}]O₂ and the comparison positive Li[Ni_{0.87}Co_{0.10}Al_{0.03}]O₂, comparative example 3) exhibit diffraction peaks at L(01̅2̅)̅, L(000), and L(012), confirming the layered structure. However, peaks at S(**111̅**) and S(**1̅1̅1**) are observed only in the W, Al two-step co-doped positive, confirming the presence of both layered and spinel structures, which are absent in the comparative example.

Table 19 presents the chemical composition of W, Al two-step co-doped Li[Ni_{0.87}Co_{0.10}Al_{0.03}]O₂ and conventional Li[Ni_{0.87}Co_{0.10}Al_{0.03}]O₂, analyzed using ICP-OES.

Table 20 evaluates the electrochemical performance (capacity and cycle life characteristics), demonstrating that the W, Al two-step co-doped positive material exhibits enhanced capacity retention and long-term stability. Table 21 assesses the rate capability, indicating that the co-doped positive material maintains higher discharge capacities at increased charge-discharge rates, confirming its superior high-rate performance.

The results confirm that W, Al two-step co-doping enhances both structural stability and electrochemical performance, making Li[Ni_{0.87}Co_{0.10}Al_{0.03}]O₂ a promising positive material for next-generation lithium-ion batteries.

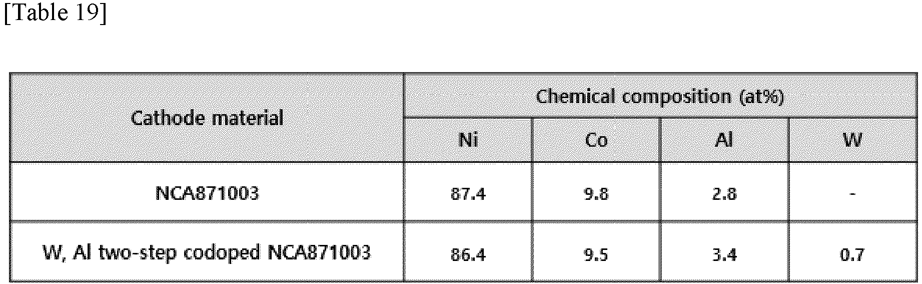

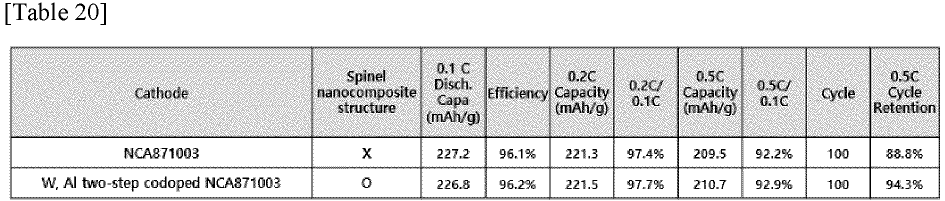

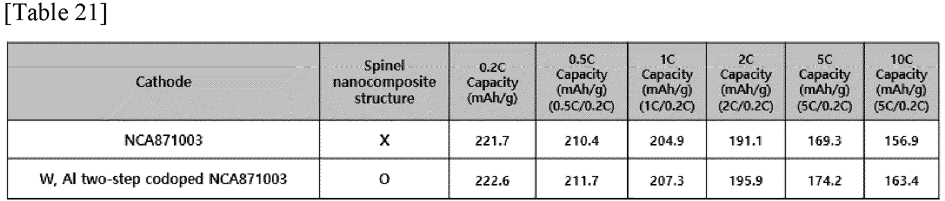

As described above, the formation of the layered & spinel nanocomposite crystal structure effectively disperses the strain that typically develops in the layered structure of Ni-rich positives during charge-discharge cycles. This strain relaxation significantly enhances the cycle life characteristics, preventing structural degradation and extending the battery lifespan. Additionally, the presence of the spinel structure provides a 3D Li⁺ diffusion pathway, which facilitates more efficient lithium-ion transport. This structural advantage leads to a significant improvement in rate capability, allowing the positive material to maintain higher discharge capacities at elevated charge-discharge rates, thereby enhancing overall electrochemical performance.

The following section describes the evaluation results of the Ni-rich NM positive material with the composition listed below, tested at 2.7-4.3 V and 30°C.
Ni-rich NM Positive Material
W wet-doped & Ti dry-co-doped Li[Ni_{0.91}Mn_{0.09}]O₂

### [Description of W Wet-Doped & Ti Dry-Co-Doped Li[Ni_{0.91}Mn_{0.09}]O₂ Ni-rich NM Positive Material]

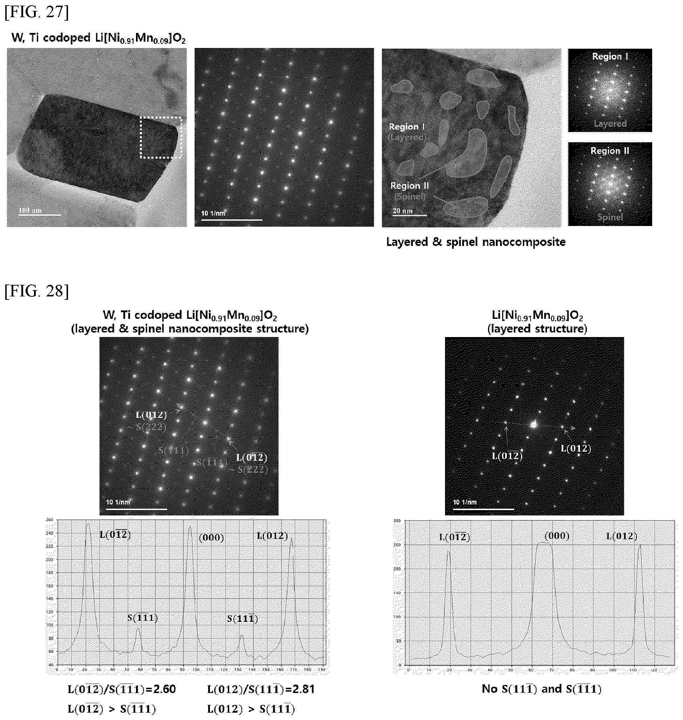

Referring to Fig. 27 and Fig. 28, the characteristics of W wet-doped & Ti dry-co-doped Li[Ni_{0.91}Mn_{0.09}]O₂ positive material are described. Fig. 27 and Fig. 28: TEM images illustrating the crystal structure of W wet-doped & Ti dry-co-doped Li[Ni_{0.91}Mn_{0.09}]O₂ and conventional Li[Ni_{0.91}Mn_{0.09}]O₂.

### {Structural Characteristics}

Examining the TEM image in Fig. 27, the SAED pattern confirms the coexistence of both layered and spinel structures. Furthermore, HR-TEM analysis reveals that these structures are interwoven, forming a layered & spinel nanocomposite structure. The FT patterns corresponding to different regions confirm the presence of distinct layered and spinel phases. This demonstrates that the W wet-doped & Ti dry-co-doped Li[Ni_{0.91}Mn_{0.09}]O₂, according to this embodiment, possesses a layered & spinel nanocomposite crystal structure, contributing to improved electrochemical performance.

Referring to Fig. 28, both the W wet-doped & Ti dry-co-doped Li[Ni_{0.91}Mn_{0.09}]O₂ and the comparison positive Li[Ni_{0.91}Mn_{0.09}]O₂, comparative example 4) exhibit diffraction peaks at L(01̅2̅)̅, L(000), and L(012), confirming the layered structure. However, peaks at S(**111̅**) and S(**1̅1̅1**) are observed only in the W, Ti co-doped positive, confirming the presence of both layered and spinel structures, which are absent in the comparative example. Table 22 presents the chemical composition of W wet-doped & Ti dry-co-doped Li[Ni_{0.91}Mn_{0.09}]O₂ and conventional Li[Ni_{0.91}Mn_{0.09}]O₂, analyzed using ICP-OES. Table 23 evaluates the electrochemical performance (capacity and cycle life characteristics), demonstrating that the W, Ti co-doped positive material exhibits enhanced capacity retention and long-term stability. Table 24 assesses the rate capability, indicating that the co-doped positive material maintains higher discharge capacities at increased charge-discharge rates, confirming its superior high-rate performance.

The results confirm that W wet-doping & Ti dry-co-doping enhance both structural stability and electrochemical performance, making Li[Ni_{0.91}Mn_{0.09}]O₂ a promising positive material for next-generation lithium-ion batteries.

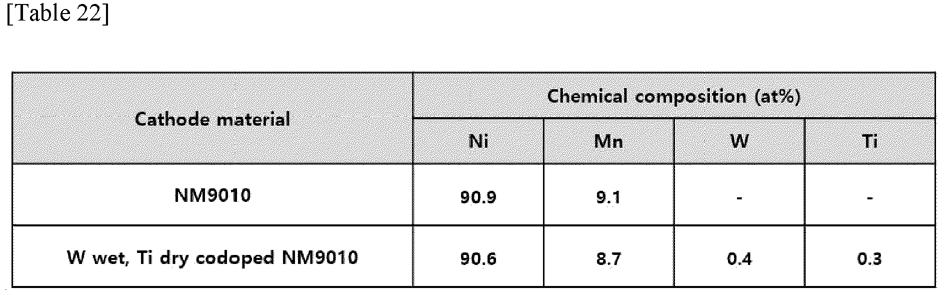

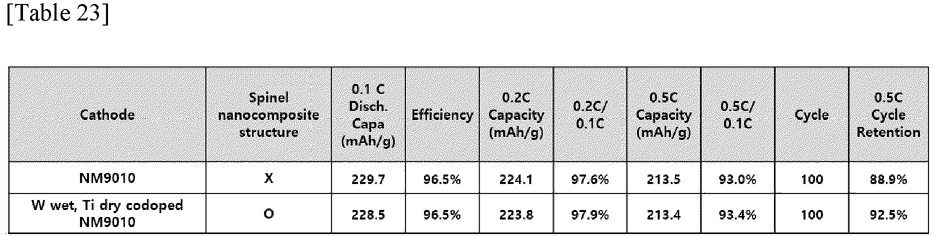

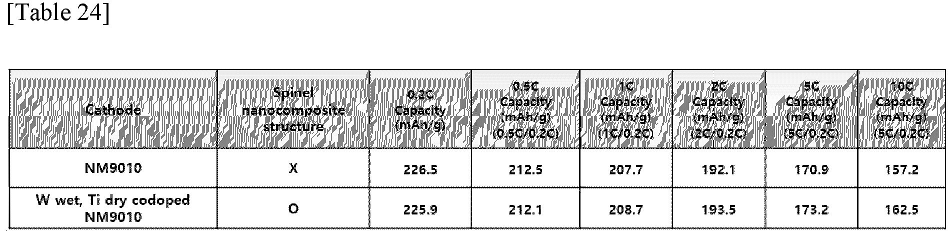

As described above, the formation of the layered & spinel nanocomposite crystal structure effectively disperses the strain that typically develops in the layered structure of Ni-rich positives during charge-discharge cycles. This strain relaxation significantly enhances the cycle life characteristics, preventing structural degradation and extending the battery lifespan. Additionally, the presence of the spinel structure provides a 3D Li⁺ diffusion pathway, which facilitates more efficient lithium-ion transport. This structural advantage leads to a significant improvement in rate capability, allowing the positive material to maintain higher discharge capacities at elevated charge-discharge rates, thereby enhancing overall electrochemical performance.

The following section describes the evaluation results of the Mid-Ni positive materials with the compositions listed below, tested at 2.7-4.5 V and 45°C. These materials are particularly designed to exhibit superior high-voltage and high-temperature performance.
Mid-Ni Positive Materials
Co wet-coated, W dry-doped Li[Ni_{0.7}Co_{0.1}Mn_{0.2}]O₂
W, Zr dry co-doped concentration-gradient Li[Ni_{0.7}Co_{0.05}Mn_{0.25}]O₂
Mo two-step doped Li[Ni_{0.6}Mn_{0.4}]O₂
[Description of Co Wet-Coated, W Dry-Doped Li[Ni_{0.7}Co_{0.1}Mn_{0.2}]O₂]

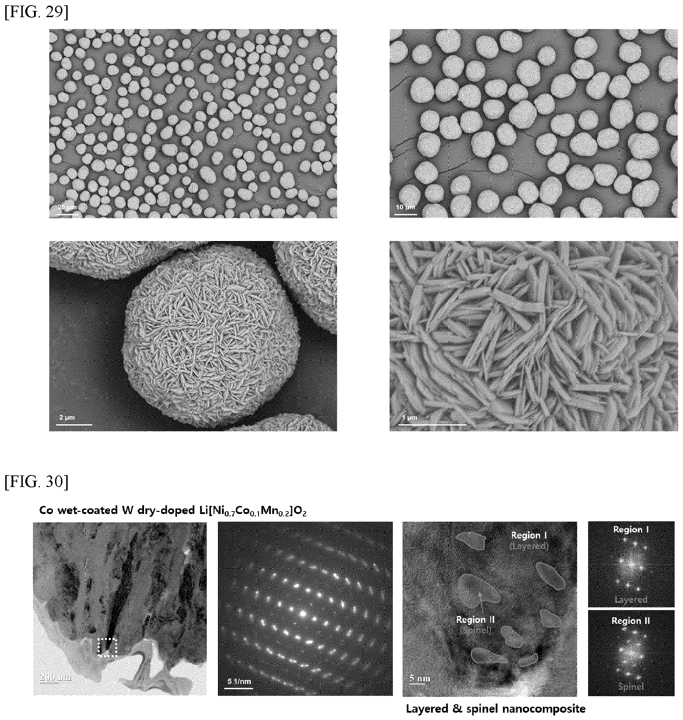

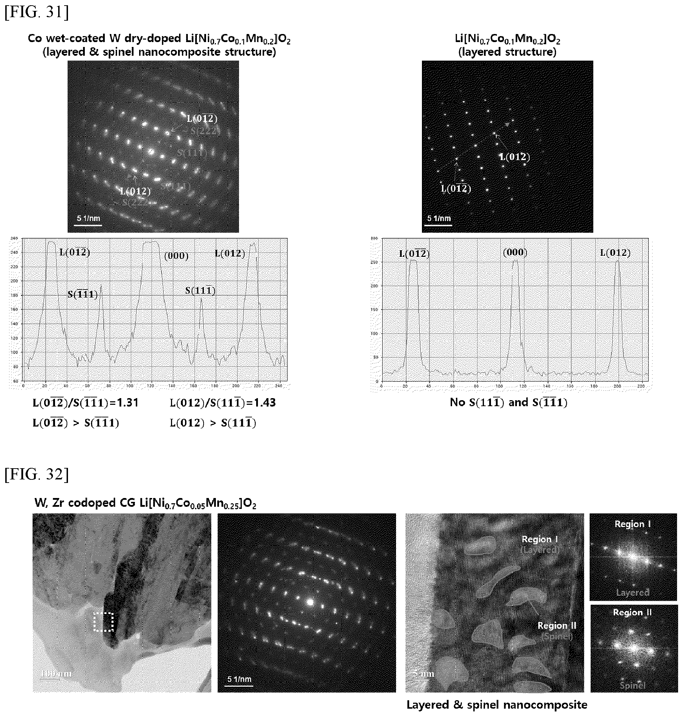

Referring to Fig. 29 to Fig. 31, the characteristics of Co wet-coated, W dry-doped Li[Ni_{0.7}Co_{0.1}Mn_{0.2}]O₂ positive material are described. Fig. 29: SEM image of Co wet-coated [Ni_{0.7}Co_{0.1}Mn_{0.2}](OH)₂ precursor. Fig. 30 and Fig. 31: TEM images illustrating the crystal structure of Co wet-coated, W dry-doped Li[Ni_{0.7}Co_{0.1}Mn_{0.2}]O₂ and conventional Li[Ni_{0.7}Co_{0.1}Mn_{0.2}]O₂.

### (Structural Characteristics)

Examining the SEM image in Fig. 29, the Co wet-coated, W dry-doped [Ni_{0.7}Co_{0.1}Mn_{0.2}](OH)₂ precursor exhibits a spherical shape with a particle size of approximately 10 µm in diameter.

In Fig. 30, the SAED pattern confirms the coexistence of both layered and spinel structures. Furthermore, HR-TEM analysis reveals that these structures are interwoven, forming a layered & spinel nanocomposite structure. The FT patterns corresponding to different regions confirm the presence of distinct layered and spinel phases.

This demonstrates that the Co wet-coated, W dry-doped Li[Ni_{0.7}Co_{0.1}Mn_{0.2}]O₂, according to this embodiment, possesses a layered & spinel nanocomposite crystal structure, contributing to improved electrochemical performance.

Referring to Fig. 31, both the Co wet-coated, W dry-doped Li[Ni_{0.7}Co_{0.1}Mn_{0.2}]O₂ and the comparison positive (Li[Ni_{0.7}Co_{0.1}Mn_{0.2}]O₂, comparative example 5) exhibit diffraction peaks at L(01̅2̅)̅, L(000), and L(012), confirming the layered structure. However, peaks at S(**111̅**) and S(**1̅1̅1**) are observed only in the Co, W co-doped positive, confirming the presence of both layered and spinel structures, which are absent in the comparative example.

Table 25 presents the chemical composition of Co wet-coated, W dry-doped Li[Ni_{0.7}Co_{0.1}Mn_{0.2}]O₂ and conventional Li[Ni_{0.7}Co_{0.1}Mn_{0.2}]O₂, analyzed using ICP-OES.

Table 26 evaluates the electrochemical performance (capacity and cycle life characteristics), demonstrating that the Co, W co-doped positive material exhibits enhanced capacity retention and long-term stability. Table 27 assesses the rate capability, indicating that the co-doped positive material maintains higher discharge capacities at increased charge-discharge rates, confirming its superior high-rate performance.

The results confirm that Co wet-coating and W dry-doping enhance both structural stability and electrochemical performance, making Li[Ni_{0.7}Co_{0.1}Mn_{0.2}]O₂ a promising positive material for next-generation lithium-ion batteries.

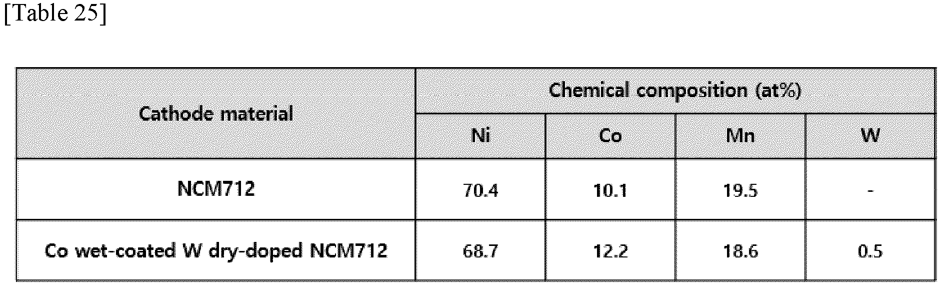

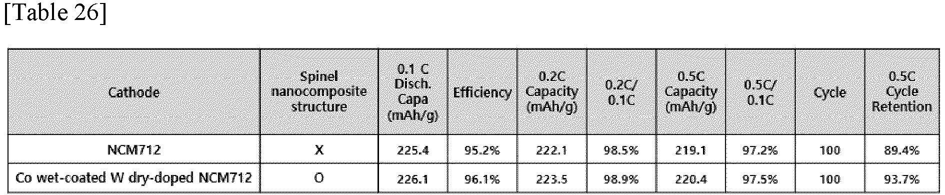

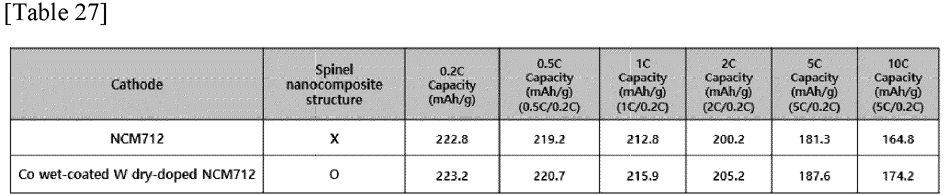

As described above, the formation of the layered & spinel nanocomposite crystal structure effectively disperses the strain that typically develops in the layered structure of Ni-rich positives during charge-discharge cycles. This strain relaxation significantly enhances the cycle life characteristics, preventing structural degradation and extending the battery lifespan. Additionally, the presence of the spinel structure provides a 3D Li⁺ diffusion pathway, which facilitates more efficient lithium-ion transport. This structural advantage leads to a significant improvement in rate capability, allowing the positive material to maintain higher discharge capacities at elevated charge-discharge rates, thereby enhancing overall electrochemical performance.

### [Description of W, Zr Dry Co-Doped Concentration-Gradient Li[Ni_{0.7}Co_{0.05}Mn_{0.25}]O₂ Mid-Ni Positive Material]

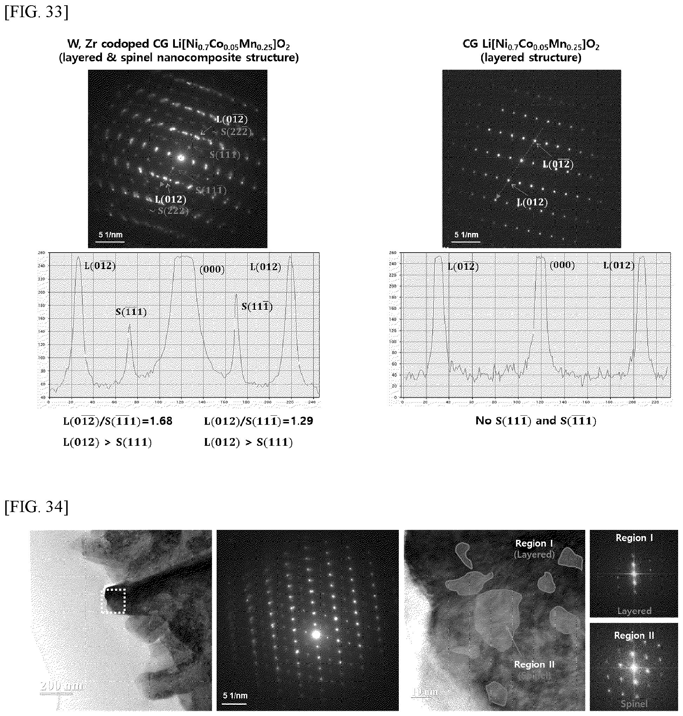

Referring to Fig. 32 and Fig. 33, the characteristics of W, Zr dry co-doped concentration-gradient Li[Ni_{0.7}Co_{0.05}Mn_{0.25}]O₂ positive material are described. Fig. 32 and Fig. 33: TEM images illustrating the crystal structure of W, Zr dry co-doped concentration-gradient Li[Ni_{0.7}Co_{0.05}Mn_{0.25}]O₂ and conventional concentration-gradient Li[Ni_{0.7}Co_{0.05}Mn_{0.25}]O₂.

### (Structural Characteristics)

Examining the TEM image in Fig. 32, the SAED pattern confirms the coexistence of both layered and spinel structures. Furthermore, HR-TEM analysis reveals that these structures are interwoven, forming a layered & spinel nanocomposite structure. The FT patterns corresponding to different regions confirm the presence of distinct layered and spinel phases. This demonstrates that the W, Zr dry co-doped concentration-gradient Li[Ni_{0.7}Co_{0.05}Mn_{0.25}]O₂, according to this embodiment, possesses a layered & spinel nanocomposite crystal structure, contributing to improved electrochemical performance.

Referring to Fig. 33, both the W, Zr dry co-doped concentration-gradient Li[Ni_{0.7}Co_{0.05}Mn_{0.25}]O₂ and the comparison positive (Li[Ni_{0.7}Co_{0.05}Mn_{0.25}]O₂, comparative example 6) exhibit diffraction peaks at L(01̅2̅)̅, L(000), and L(012), confirming the layered structure. However, peaks at S(**111̅**) and S(**1̅1̅1**) are observed only in the W, Zr co-doped positive, confirming the presence of both layered and spinel structures, which are absent in the comparative example.

Table 28 presents the chemical composition of W, Zr dry co-doped concentration-gradient (Li[Ni_{0.7}Co_{0.05}Mn_{0.25}]O₂ and conventional concentration-gradient (Li[Ni_{0.7}Co_{0.05}Mn_{0.25}]O₂, analyzed using ICP-OES. Table 29 evaluates the electrochemical performance (capacity and cycle life characteristics), demonstrating that the W, Zr co-doped positive material exhibits enhanced capacity retention and long-term stability. Table 30 assesses the rate capability, indicating that the co-doped positive material maintains higher discharge capacities at increased charge-discharge rates, confirming its superior high-rate performance.

The results confirm that W, Zr dry co-doping enhances both structural stability and electrochemical performance, making (Li[Ni_{0.7}Co_{0.05}Mn_{0.25}]O₂ a promising positive material for next-generation lithium-ion batteries.

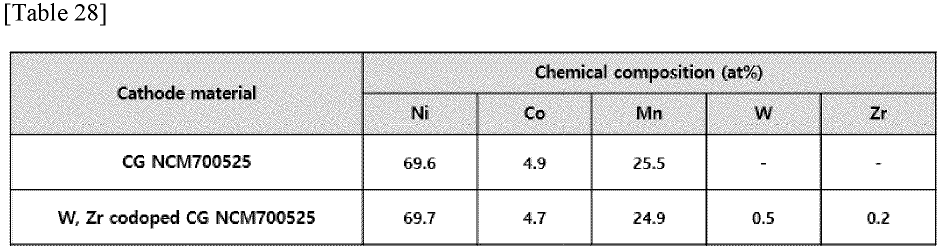

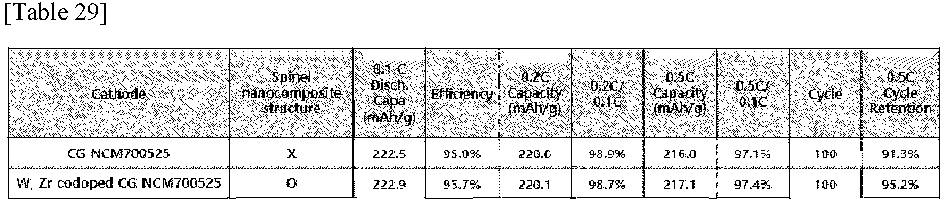

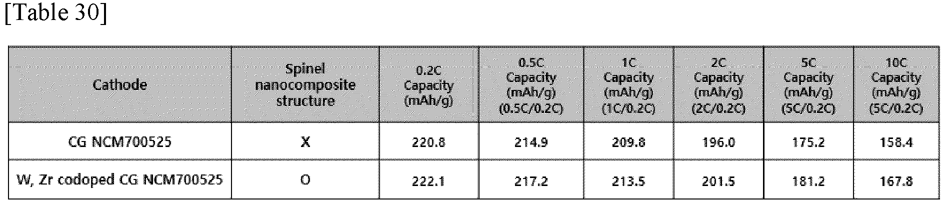

As described above, the formation of the layered & spinel nanocomposite crystal structure effectively disperses the strain that typically develops in the layered structure of Ni-rich positives during charge-discharge cycles. This strain relaxation significantly enhances the cycle life characteristics, preventing structural degradation and extending the battery lifespan. Additionally, the presence of the spinel structure provides a 3D Li⁺ diffusion pathway, which facilitates more efficient lithium-ion transport. This structural advantage leads to a significant improvement in rate capability, allowing the positive material to maintain higher discharge capacities at elevated charge-discharge rates, thereby enhancing overall electrochemical performance.

### [Description of Mo Two-Step Doped Li[Ni_{0.6}Mn_{0.4}]O₂ Mid-Ni Positive Material]

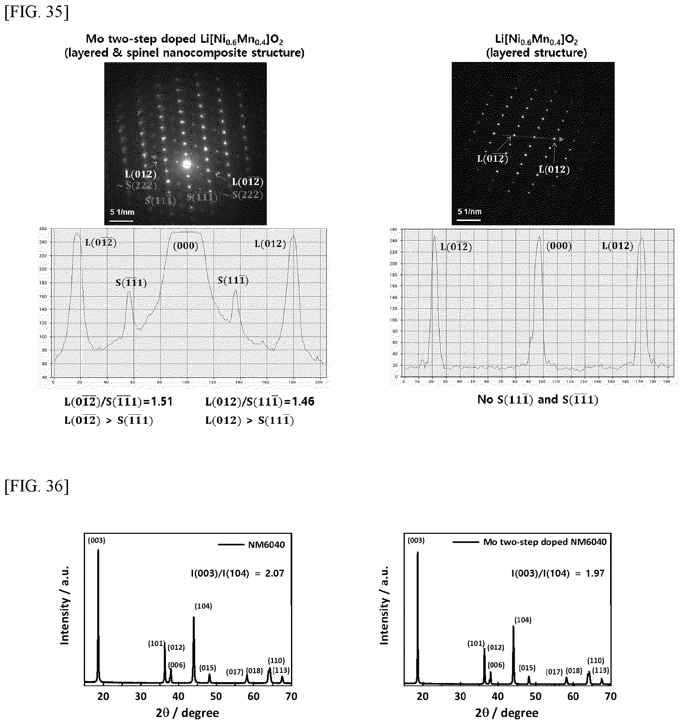

Referring to Fig. 34 to Fig. 36, the characteristics of Mo two-step doped Li[Ni_{0.6}Mn_{0.4}]O₂ positive material are described. Fig. 34 and Fig. 35: TEM images illustrating the crystal structure of Mo two-step doped Li[Ni_{0.6}Mn_{0.4}]O₂ and conventional Li[Ni_{0.6}Mn_{0.4}]O₂. Fig. 36: XRD analysis graph showing the crystal structure of Mo two-step doped Li[Ni_{0.6}Mn_{0.4}]O₂ and conventional Li[Ni_{0.6}Mn_{0.4}]O₂.

### (Structural Characteristics)

Examining the TEM image in Fig. 34, the SAED pattern confirms the coexistence of both layered and spinel structures. Furthermore, HR-TEM analysis reveals that these structures are interwoven, forming a layered & spinel nanocomposite structure. The FT patterns corresponding to different regions confirm the presence of distinct layered and spinel phases. This demonstrates that the Mo two-step doped Li[Ni_{0.6}Mn_{0.4}]O₂, according to this embodiment, possesses a layered & spinel nanocomposite crystal structure, contributing to improved electrochemical performance.

Referring to Fig. 35, both the Mo two-step doped Li[Ni_{0.6}Mn_{0.4}]O₂ and the comparison positive Li[Ni_{0.6}Mn_{0.4}]O₂, comparative example 7) exhibit diffraction peaks at L(01̅2̅)̅, L(000), and L(012), confirming the layered structure. However, peaks at S(**111̅**) and S(**1̅1̅1**) are observed only in the Mo two-step doped positive, confirming the presence of both layered and spinel structures, which are absent in the comparative example. Referring to Fig. 36, the I(003)/I(104) ratio, which represents the degree of layered structure development, decreases from 2.07 in the standard positive to 1.97 in the Mo two-step doped positive. This reduction confirms the formation of a layered & spinel nanocomposite structure, which plays a crucial role in enhancing the structural stability and electrochemical performance of the positive material.

Table 31 presents the chemical composition of Mo two-step doped Li[Ni_{0.6}Mn_{0.4}]O₂ and conventional Li[Ni_{0.6}Mn_{0.4}]O₂, analyzed using ICP-OES. **Tables 32** and **33** present the electrochemical performance (capacity, cycle life characteristics, and rate capability) of W, Zr dry co-doped concentration-gradient Li[Ni_{0.7}Co_{0.05}Mn_{0.25}]O₂ and conventional Li[Ni_{0.6}Mn_{0.4}]O₂.

The results confirm that Mo two-step doping enhances both structural stability and electrochemical performance, making Li[Ni_{0.6}Mn_{0.4}]O₂ a promising positive material for next-generation lithium-ion batteries.

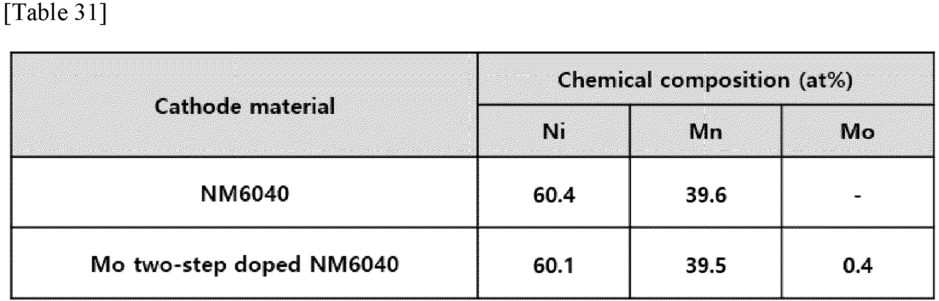

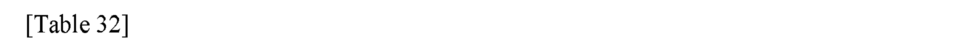

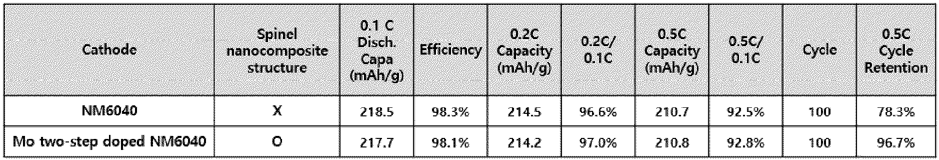

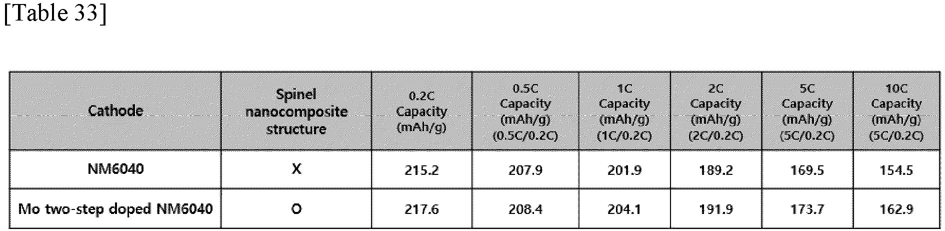

As described above, the formation of the layered & spinel nanocomposite crystal structure effectively disperses the strain that typically develops in the layered structure of Ni-rich positives during charge-discharge cycles. This strain relaxation significantly enhances the cycle life characteristics, preventing structural degradation and extending the battery lifespan. Additionally, the presence of the spinel structure provides a 3D Li⁺ diffusion pathway, which facilitates more efficient lithium-ion transport. This structural advantage leads to a significant improvement in rate capability, allowing the positive material to maintain higher discharge capacities at elevated charge-discharge rates, thereby enhancing overall electrochemical performance.

Thus, the present invention introduces a nanocomposite structure that integrates spinel (Spinel) and layered (Layered) structures, providing various performance enhancements compared to conventional layered-structure positive materials. Conventional layered positive materials suffer from increasing structural instability with repeated charge-discharge cycles, leading to structural collapse during long-term use. In contrast, the nanocomposite structure introduced in this invention provides a 3D Li⁺ diffusion pathway, significantly enhancing structural stability and mitigating degradation. While conventional positive materials offer high capacity, they suffer from poor lithium-ion diffusion, leading to low rate capability. The incorporation of spinel structure improves lithium-ion transport, enabling faster charge-discharge cycles and higher rate capability.

In layered positives, mechanical strain accumulation during charge-discharge cycling leads to a decline in long-term cycle performance. The nanocomposite structure in this invention effectively disperses mechanical stress, increasing the battery lifespan by 10-20% compared to conventional materials. Improved Thermal and Voltage Stability: Ni-rich positives are prone to oxygen release and thermal instability at high voltages (above 4.2V), posing safety risks. The nanocomposite positive developed in this invention improves thermal stability, allowing the battery to operate safely and efficiently at voltages above 4.5V.

The spinel-layered nanocomposite positive material developed in this invention successfully overcomes the limitations of conventional single-structure positives, providing significant improvements in lithium-ion battery performance.

By integrating layered and spinel structures at the nanoscale, this invention enhances electrochemical performance and cycle life while maintaining compatibility with existing manufacturing processes. The proposed high-performance positive material and cost-effective production method hold great potential for industrial applications, advancing the next generation of high-energy, long-life lithium-ion batteries.

The exemplary embodiment described above is only to describe exemplary embodiment of the present invention and is not limited to the exemplary embodiment, and various modifications and variations are possible by those skilled in the art within the spirit and claims of the present invention, and it will be said that the modifications and variations fall within the scope of the technical rights of the present invention.

## Claims

1. A positive active material for a lithium secondary battery, comprising a secondary particle consisting of a plurality of primary particles, wherein the primary particles include a nanocomposite structure in which a spinel (Fd3m) structure and a layered (R3̅m̅) structure are mixed at the nanoscale.

2. The positive active material for a lithium secondary battery according to Claim 1, wherein SAED electron diffraction images show S(a, a, a + 2) and S(b, b, b - 2) electron diffraction spots.

3. The positive active material for a lithium secondary battery according to Claim 2, wherein in the SAED electron diffraction image, the peak intensity of the L(0, -1, -2-3(m-1)) plane is greater than that of the S(a, a, a+2) plane (I(L(0, -1, -2-3(m-1))) > I(S(a, a, a+2))), and the peak intensity of the L(0, 1, 2+3(n-1)) plane is greater than that of the S(b, b, b-2) plane (I(L(0, 1, 2+3(n-1))) > I(S(b, b, b-2))).

4. The positive active material for a lithium secondary battery according to one of claims 1 to 3, wherein the maximum length passing through the center of the cross-section of the spinel-formed region is between 1 nm and 100 nm, and the cross-sectional area of the spinel-formed region is between 1 nm² and 10,000 nm².

5. The positive active material for a lithium secondary battery according to one of claims 1 to 4, wherein the nanocomposite is located inside or on the surface of the primary particles, and inside or on the surface of the secondary particles.

6. The positive active material for a lithium secondary battery according to one of claims 1 to 5, wherein the nanocomposite is observable before the start of the charge-discharge cycle.

7. The positive active material for a lithium secondary battery according to one of claims 1 to 6, wherein the nanocomposite provides a three-dimensional (3D) Li⁺ transport pathway in the charged state, thereby improving the rate capability of the positive material.

8. The positive active material for a lithium secondary battery according to one of claims 1 to 7, wherein the nanocomposite observable before the charge-discharge cycle is also found after the cycle, and the nanocomposite found inside the primary particles after the cycle is distinguishable from impurity spinel that forms on the surface of the secondary particles due to electrode degradation.

9. The positive active material for a lithium secondary battery according to one of claims 1 to 8,
wherein the primary particles contain nickel (Ni), M1, and M2,
M1 includes at least one of cobalt (Co), manganese (Mn), and aluminum (Al),
Nickel (Ni) is present at ≥50 mol%M2 is a doping element and is present at 0.05 mol% to 10 mol%.

10. The positive active material for a lithium secondary battery according to Claim 9, wherein
M2 comprises at least one selected from cobalt (Co), manganese (Mn), titanium (Ti),
magnesium (Mg), tantalum (Ta), niobium (Nb), tungsten (W), molybdenum (Mo), antimony (Sb), tellurium (Te), tin (Sn), ruthenium (Ru), boron (B), hafnium (Hf), gallium (Ga),
germanium (Ge), chromium (Cr), vanadium (V), copper (Cu), calcium (Ca), zinc (Zn),
barium (Ba), strontium (Sr), aluminum (Al), and zirconium (Zr).

11. The positive active material for a lithium secondary battery according to Claim 9 or 10,
wherein the material is obtained by mixing a composite metal hydroxide precursor (A(OH)₂) with M2 and performing high-temperature heat treatment, where A is at least one selected from Ni, Co, Mn, or Al, and/or
wherein the material is obtained by mixing an M2-doped composite metal hydroxide precursor (M2-doped A(OH)₂) with a lithium precursor and performing high-temperature heat treatment, where A is selected from Ni, Co, Mn, or Al.

12. The positive active material for a lithium secondary battery according to one of claims 9 to 11, wherein the material is obtained by mixing an M2-coated composite metal hydroxide precursor (M2-coated A(OH)₂) with a lithium precursor and performing high-temperature heat treatment, where A is selected from Ni, Co, Mn, or Al.

13. The positive active material for a lithium secondary battery according to one of claims 9 to 12, wherein the material is obtained by mixing either an M2-doped A(OH)₂ precursor or an M2-coated A(OH)₂ precursor with a lithium precursor and additional M2, followed by high-temperature heat treatment, where A is selected from Ni, Co, Mn, or Al.

14. The positive active material for a lithium secondary battery according toone of claims 1 to 13, wherein a concentration gradient of Ni, Co, or Mn is formed within the particles.

15. The positive active material for a lithium secondary battery according to one of claims 1 to 14, wherein wherein the positive active material is obtained through a first calcination process by mixing at least one of a composite metal hydroxide A(OH)₂ precursor and a wet-doped composite metal hydroxide A(OH)₂ precursor with a lithium source, followed by a second calcination process in which a dry dopant is additionally introduced and subjected to further high-temperature heat treatment, for use in a lithium secondary battery.
